# EUROPEAN PATENT APPLICATION

(11) **EP 4 082 649 A1**
(43) Date of publication of application: **02.11.2022**
(21) Application number: 20904424.7
(22) Date of filing: 18.12.2020
(51) Int. Cl.: B01D 53/44, B01D 53/81, B01D 53/96

(54) **ORGANIC SOLVENT RECOVERY SYSTEM**

(30) Priority: 26.12.2019 JP 2019236744; 28.08.2020 JP 2020144541; 28.08.2020 JP 2020144542; 28.08.2020 JP 2020144543; 28.08.2020 JP 2020144544
(71) Applicant: TOYOBO CO., LTD., Osaka-shi Osaka 5300001 (JP)
(72) Inventor: KOHNO, Daiki, Osaka-shi, Osaka 530-8230 (JP); SUGIURA, Tsutomu, Osaka-shi, Osaka 530-8230 (JP); TANAKA, Masahiro, Tokyo 104-8345 (JP)
(74) Representative: Vossius & Partner Patentanwälte Rechtsanwälte mbB
(86) International application number: PCT/JP2020/047402
(87) International publication number: WO 2021/132071

(57) **Abstract**

In an organic solvent recovery system of the present disclosure, a cooling/condensing apparatus (100) includes: a reticulated structure (121) that separates cooled exhaust gas (G2) into a condensed organic solvent and cooling treatment gas when exposed to the cooled exhaust gas (G2); and a chamber (123) that stores, for a certain period of time, cooling treatment gas (G3) after passing through the reticulated structure (121). The first flow-through path (F1) is disposed to introduce part (G4) of the cooling treatment gas from a ceiling portion (127) of the chamber (123) to a concentrating apparatus (300).

## Description

### TECHNICAL FIELD

The present disclosure relates to an organic solvent recovery system.

### BACKGROUND ART

Conventionally, as a treatment system for recovering an organic solvent from exhaust gas containing the organic solvent, there has been known a system in which a cooling/condensing apparatus is combined with a concentrating apparatus employing an adsorption element. The cooling/condensing apparatus condenses and recovers the organic solvent to reduce the concentration of the organic solvent in the exhaust gas. In the concentrating apparatus employing the adsorption element, the adsorption element is exposed to the exhaust gas discharged from the cooling/condensing apparatus and having the reduced concentration of the organic solvent so as to adsorb the organic solvent, thereby further reducing the concentration of the organic solvent in the exhaust gas. Further, high-temperature gas is blown to an adsorption material in which the organic solvent is adsorbed so as to desorb the organic solvent, and desorption gas containing a high concentration of the organic solvent is discharged. The desorption gas is returned to the cooling/condensing apparatus and is treated again (see PTL 1 and PTL 2).

### CITATION LIST

### PATENT LITERATURE

PTL 1: Japanese Patent Laying-Open No. 2016-101553
PTL 2: Japanese Patent Laying-Open No. 2017-991

### SUMMARY OF INVENTION

### TECHNICAL PROBLEM

In a production facility, a certain amount of clean gas is supplied. Therefore, exhaust gas including the supplied gas is discharged to an external environment. In recent years, in response to worldwide regulations on exhaust gas, an organic solvent has been required to be removed to attain a very low concentration, and therefore high treatment efficiency has been required.

An object of the present disclosure is to provide an organic solvent recovery system capable of recovering an organic solvent from exhaust gas more efficiently.

### SOLUTION TO PROBLEM

According to an aspect of an organic solvent recovery system of the present disclosure, an organic solvent recovery system includes: a cooling/condensing apparatus that cools exhaust gas containing an organic solvent to liquefy and condense the organic solvent and discharges cooling treatment gas in which a concentration of the organic solvent is reduced; a first flow-through path through which part of the cooling treatment gas flows; a concentrating apparatus that has an adsorption element, that adsorbs, in the adsorption element, the organic solvent contained in the cooling treatment gas introduced from the first flow-through path and discharges clean gas in which the concentration of the organic solvent is further reduced, and that introduces high-temperature gas to desorb the organic solvent from the adsorption element and discharges desorption gas; and a second flow-through path that introduces the desorption gas into the cooling/condensing apparatus, wherein the cooling/condensing apparatus includes a reticulated structure that separates the cooled exhaust gas into the condensed organic solvent and the cooling treatment gas when exposed to the cooled exhaust gas, and a chamber that stores, for a certain period of time, the cooling treatment gas after passing through the reticulated structure, and the first flow-through path is disposed to introduce the part of the cooling treatment gas from a ceiling portion of the chamber to the concentrating apparatus.

In the organic solvent recovery system, the chamber has a partition portion that enables suction of the cooling treatment gas into the first flow-through path in a direction opposite to a discharging direction of the cooling treatment gas discharged from the reticulated structure.

In the organic solvent recovery system, the cooling/condensing apparatus includes a heat exchanger that performs the cooling by exchanging heat with refrigerant.

In the organic solvent recovery system, the second flow-through path is disposed such that a desorption portion is disposed above a position of confluence of the desorption gas and the exhaust gas

In the organic solvent recovery system, the exhaust gas is gas discharged from a production facility, and the organic solvent recovery system includes a return path through which a remainder of the cooling treatment gas other than the part of the cooling treatment gas discharged from the first flow-through path is returned to the production facility.

In the organic solvent recovery system, the heat exchanger includes a first heat exchanger and a second heat exchanger provided at a stage preceding the first heat exchanger, and the second heat exchanger cools the exhaust gas introduced into the cooling/condensing apparatus, by exchanging heat with the remainder of the cooling treatment gas.

According to an aspect of an organic solvent recovery system of the present disclosure, the organic solvent recovery system for recovering an organic solvent from exhaust gas containing the organic solvent and discharged from a production facility includes: a cooling/condensing apparatus that cools the exhaust gas containing the organic solvent to liquefy and condense the organic solvent and discharges cooling treatment gas in which a concentration of the organic solvent is reduced; a first flow-through path through which the cooling treatment gas flows; a first concentrating apparatus that adsorbs, in a first adsorption element, the organic solvent contained in the cooling treatment gas introduced from the first flow-through path and discharges first treatment gas in which the concentration of the organic solvent is further reduced, and that introduces high-temperature gas to desorb the organic solvent from the first adsorption element and discharges first desorption gas, a second flow-through path through which part of the first treatment gas flows; a second concentrating apparatus that adsorbs, in a second adsorption element, the organic solvent contained in the first treatment gas introduced from the second flow-through path and discharges second treatment gas in which the concentration of the organic solvent is further reduced, and that introduces high-temperature gas to desorb the organic solvent from the second adsorption element and discharges second desorption gas; and a third flow-through path through which the first desorption gas and the second desorption gas are returned to the cooling/condensing apparatus.

In the organic solvent recovery system, the cooling/condensing apparatus further includes a reticulated structure that separates the cooled exhaust gas into the condensed organic solvent and the cooling treatment gas when exposed to the cooled exhaust gas, and a chamber that stores, for a certain period of time, the cooling treatment gas after passing through the reticulated structure, and the first flow-through path is disposed to introduce the cooling treatment gas from a ceiling portion of the chamber to the first concentrating apparatus.

In the organic solvent recovery system, the chamber has a partition portion that enables suction of the cooling treatment gas into the first flow-through path in a direction opposite to a discharging direction of the cooling treatment gas discharged from the reticulated structure.

In the organic solvent recovery system, the cooling/condensing apparatus further includes a heat exchanger that performs the cooling by exchanging heat with refrigerant.

The organic solvent recovery system further includes a return path through which a remainder of the first treatment gas other than the part of the first treatment gas discharged from the second flow-through path is returned to the production facility.

In the organic solvent recovery system, the heat exchanger includes a first heat exchanger and a second heat exchanger provided at a stage preceding the first heat exchanger, and the second heat exchanger cools the exhaust gas introduced into the cooling/condensing apparatus, by exchanging heat with the remainder of the first treatment gas.

According to an aspect of an organic solvent recovery system of the present disclosure, an organic solvent recovery system for recovering an organic solvent from exhaust gas containing the organic solvent and discharged from a production facility includes: a cooling/condensing apparatus that cools the exhaust gas containing the organic solvent to liquefy and condense the organic solvent and discharges cooling treatment gas in which a concentration of the organic solvent of the exhaust gas is reduced; a cooling gas flow-through path through which the cooling treatment gas flows; a concentrating apparatus that adsorbs, in an adsorption element, the organic solvent contained in the cooling treatment gas introduced from the cooling gas flow-through path and discharges treatment gas in which the concentration of the organic solvent is further reduced, and that introduces high-temperature gas to desorb the organic solvent from the adsorption element and discharges desorption gas; and a desorption gas flow-through path through which the desorption gas is introduced into the cooling/condensing apparatus.

The cooling/condensing apparatus includes a cooling portion through which the exhaust gas flows, and a separation portion located on a downstream side with respect to the cooling portion when viewed along a direction in which the exhaust gas flows, the separation portion has a receiving portion that receives a cooled condensate liquid containing the organic solvent and cooled by the cooling portion, a reticulated structure that separates the cooled exhaust gas into the cooled condensate liquid and the cooling treatment gas when exposed to the cooled exhaust gas, and a chamber that stores, for a certain period of time, the cooling treatment gas after passing through the reticulated structure, and when viewed along a direction in which the exhaust gas flows, a direction of flow from the reticulated structure to the chamber in the separation portion intersects a direction of flow from the cooling portion to the separation portion so as to allow the exhaust gas to flow in a direction of L shape.

In the organic solvent recovery system, a heater is disposed on a downstream side with respect to the reticulated structure so as to heat the cooling treatment gas.

In the organic solvent recovery system , a weir is provided in the chamber to prevent the cooled condensate liquid from flowing into the cooling gas flow-through path.

In the organic solvent recovery system, the concentrating apparatus includes a first concentrating apparatus and a second concentrating apparatus located on a downstream side with respect to the first concentrating apparatus, and the first concentrating apparatus adsorbs, in a first adsorption element, the organic solvent contained in the cooling treatment gas introduced from the cooling gas flow-through path and discharges first treatment gas in which the concentration of the organic solvent is further reduced, and introduces high-temperature gas to desorb the organic solvent from the first adsorption element and discharges first desorption gas, the organic solvent recovery system further includes a first treatment gas flow-through path through which part of the first treatment gas flows, wherein the second concentrating apparatus adsorbs, in a second adsorption element, the organic solvent contained in the first treatment gas introduced from the first treatment gas flow-through path and discharges second treatment gas in which the concentration of the organic solvent is further reduced, and that introduces high-temperature gas to desorb the organic solvent from the second adsorption element and discharges second desorption gas.

In the organic solvent recovery system, in the first concentrating apparatus, a plurality of the first adsorption elements are disposed in a peripheral direction with respect to a cylinder axis of a rotor that is rotatable with respect to the cylinder axis, the rotor having a hollow cylindrical shape.

In the organic solvent recovery system, in the second concentrating apparatus, the second adsorption element is disposed on an adsorption rotor that is rotatable with respect to a cylinder axis of the adsorption rotor, the adsorption rotor having a shape of disk.

According to an aspect of an organic solvent recovery system of the present disclosure, an organic solvent recovery system for recovering an organic solvent from exhaust gas containing the organic solvent and discharged from a production facility includes: a cooling/condensing apparatus that cools the exhaust gas containing the organic solvent to liquefy and condense the organic solvent and discharges cooling treatment gas in which a concentration of the organic solvent is reduced; a cooling gas flow-through path through which the cooling treatment gas flows; a first concentrating apparatus that adsorbs, in a first adsorption element, the organic solvent contained in the cooling treatment gas introduced from the cooling gas flow-through path and discharges first treatment gas in which the concentration of the organic solvent is further reduced, and that introduces high-temperature gas to desorb the organic solvent from the first adsorption element and discharges first desorption gas; a first treatment gas flow-through path through which part of the first treatment gas flows; and a second concentrating apparatus that adsorbs, in a second adsorption element, the organic solvent contained in the first treatment gas introduced from the first treatment gas flow-through path and discharges second treatment gas in which the concentration of the organic solvent is further reduced, and that introduces high-temperature gas to desorb the organic solvent from the second adsorption element and discharges second desorption gas, wherein the first desorption gas is returned to the cooling/condensing apparatus and the second desorption gas is returned to the cooling gas flow-through path.

According to an aspect of an organic solvent recovery system of the present disclosure, an organic solvent recovery system for recovering an organic solvent from exhaust gas containing the organic solvent and discharged from a production facility includes: a cooling/condensing apparatus that cools the exhaust gas containing the organic solvent to liquefy and condense the organic solvent and discharges cooling treatment gas in which a concentration of the organic solvent is reduced; a cooling gas flow-through path through which the cooling treatment gas flows; a first concentrating apparatus that adsorbs, in a first adsorption element, the organic solvent contained in the cooling treatment gas introduced from the cooling gas flow-through path and discharges first treatment gas in which the concentration of the organic solvent is further reduced, and that introduces high-temperature gas using a first heater to desorb the organic solvent from the first adsorption element and discharges first desorption gas; a first treatment gas flow-through path through which part of the first treatment gas flows; and a second concentrating apparatus that adsorbs, in a second adsorption element, the organic solvent contained in the first treatment gas introduced from the first treatment gas flow-through path and discharges second treatment gas in which the concentration of the organic solvent is further reduced, and that introduces high-temperature gas using a second heater to desorb the organic solvent from the second adsorption element and discharges second desorption gas, wherein the first desorption gas is returned to the cooling/condensing apparatus and the second desorption gas is returned to the first heater.

According to an aspect of an organic solvent recovery system of the present disclosure, an organic solvent recovery system for recovering an organic solvent from exhaust gas containing the organic solvent and discharged from a production facility includes: a cooling/condensing apparatus that cools the exhaust gas containing the organic solvent to liquefy and condense the organic solvent and discharges cooling treatment gas in which a concentration of the organic solvent is reduced; a cooling gas flow-through path through which the cooling treatment gas flows; a first concentrating apparatus that adsorbs, in a first adsorption element, the organic solvent contained in the cooling treatment gas introduced from the cooling gas flow-through path and discharges first treatment gas in which the concentration of the organic solvent is further reduced, and that introduces high-temperature gas to desorb the organic solvent from the first adsorption element and discharges first desorption gas; a first treatment gas flow-through path through which part of the first treatment gas flows; a cooling/condensing apparatus return path through which a remainder of the first treatment gas other than part of the first treatment gas discharged from the first treatment gas flow-through path is returned to the cooling/condensing apparatus; and a second concentrating apparatus that adsorbs, in a second adsorption element, the organic solvent contained in the first treatment gas introduced from the first treatment gas flow-through path and discharges second treatment gas in which the concentration of the organic solvent is further reduced, and that introduces high-temperature gas to desorb the organic solvent from the second adsorption element and discharges second desorption gas, wherein the first desorption gas is returned to the cooling/condensing apparatus and the second desorption gas is returned to the cooling/condensing apparatus return path.

According to an aspect of an organic solvent recovery system of the present disclosure, an organic solvent recovery system for recovering an organic solvent from exhaust gas containing the organic solvent and discharged from a production facility includes: a cooling/condensing apparatus that cools the exhaust gas containing the organic solvent to liquefy and condense the organic solvent and discharges cooling treatment gas in which a concentration of the organic solvent is reduced; a cooling gas flow-through path through which the cooling treatment gas flows; a first concentrating apparatus that adsorbs, in a first adsorption element, the organic solvent contained in the cooling treatment gas introduced from the cooling gas flow-through path and discharges first treatment gas in which the concentration of the organic solvent is further reduced, and that introduces high-temperature gas to desorb the organic solvent from the first adsorption element and discharges first desorption gas; a first treatment gas flow-through path through which part of the first treatment gas flows; and a second concentrating apparatus that adsorbs, in a second adsorption element, the organic solvent contained in the first treatment gas introduced from the first treatment gas flow-through path and discharges second treatment gas in which the concentration of the organic solvent is further reduced, and that introduces high-temperature gas to desorb the organic solvent from the second adsorption element and discharges second desorption gas, wherein the cooling/condensing apparatus includes a heat exchanger that performs the cooling by exchanging heat with refrigerant, the organic solvent recovery system further includes a production facility return path through which part of the exhaust gas discharged from the production facility is returned to the production facility after passing through the heat exchanger, and the first desorption gas is returned to the cooling/condensing apparatus and the second desorption gas is returned to the production facility return path.

In the organic solvent recovery system, in the first concentrating apparatus, a plurality of the first adsorption elements are disposed in a peripheral direction with respect to a cylinder axis of a rotor that is rotatable with respect to the cylinder axis, the rotor having a hollow cylindrical shape.

In the organic solvent recovery system, in the second concentrating apparatus, the second adsorption element is disposed on an adsorption rotor that is rotatable with respect to a cylinder axis of the adsorption rotor, the adsorption rotor having a shape of disk.

According to an aspect of an organic solvent recovery system of the present disclosure, an organic solvent recovery system for recovering an organic solvent from exhaust gas containing the organic solvent and discharged from a production facility includes: a cooling/condensing apparatus that cools the exhaust gas containing the organic solvent to liquefy and condense the organic solvent and discharges cooling treatment gas in which a concentration of the organic solvent is reduced; a cooling gas flow-through path through which part of the cooling treatment gas flows; a first concentrating apparatus that adsorbs, in a first adsorption element, the organic solvent contained in the cooling treatment gas introduced from the cooling gas flow-through path and discharges first treatment gas in which the concentration of the organic solvent is further reduced, and that introduces high-temperature gas to desorb the organic solvent from the first adsorption element and discharges first desorption gas; a first treatment gas flow-through path through which the first treatment gas flows; and a second concentrating apparatus that adsorbs, in a second adsorption element, the organic solvent contained in the first treatment gas introduced from the first treatment gas flow-through path and discharges second treatment gas in which the concentration of the organic solvent is further reduced, and that introduces high-temperature gas to desorb the organic solvent from the second adsorption element and discharges second desorption gas, wherein the cooling/condensing apparatus includes a heat exchanger that performs the cooling of the exhaust gas by exchanging heat with refrigerant, the organic solvent recovery system further includes a heat exchanger return path through which a remainder of the cooling treatment gas other than the part of the cooling treatment gas is returned to the heat exchanger, and the first desorption gas is returned to the cooling/condensing apparatus and the second desorption gas is returned to the cooling gas flow-through path.

According to an aspect of an organic solvent recovery system of the present disclosure, an organic solvent recovery system for recovering an organic solvent from exhaust gas containing the organic solvent and discharged from a production facility includes: a cooling/condensing apparatus that cools the exhaust gas containing the organic solvent to liquefy and condense the organic solvent and discharges cooling treatment gas in which a concentration of the organic solvent is reduced; a cooling gas flow-through path through which part of the cooling treatment gas flows; a first concentrating apparatus that adsorbs, in a first adsorption element, the organic solvent contained in the cooling treatment gas introduced from the cooling gas flow-through path and discharges first treatment gas in which the concentration of the organic solvent is further reduced, and that introduces high-temperature gas using a heater to desorb the organic solvent from the first adsorption element and discharges first desorption gas; a first treatment gas flow-through path through which the first treatment gas flows; and a second concentrating apparatus that adsorbs, in a second adsorption element, the organic solvent contained in the first treatment gas introduced from the first treatment gas flow-through path and discharges second treatment gas in which the concentration of the organic solvent is further reduced, and that introduces high-temperature gas to desorb the organic solvent from the second adsorption element and discharges second desorption gas, wherein the cooling/condensing apparatus includes a heat exchanger that performs the cooling of the exhaust gas by exchanging heat with refrigerant, the organic solvent recovery system further includes a heat exchanger return path through which a remainder of the cooling treatment gas other than the part of the cooling treatment gas is returned to the heat exchanger, wherein the first desorption gas is returned to the cooling/condensing apparatus and the second desorption gas is returned to the heater.

According to an aspect of an organic solvent recovery system of the present disclosure, an organic solvent recovery system for recovering an organic solvent from exhaust gas containing the organic solvent and discharged from a production facility includes: a cooling/condensing apparatus that cools the exhaust gas containing the organic solvent to liquefy and condense the organic solvent and discharges cooling treatment gas in which a concentration of the organic solvent is reduced; a cooling gas flow-through path through which part of the cooling treatment gas flows; a first concentrating apparatus that adsorbs, in a first adsorption element, the organic solvent contained in the cooling treatment gas introduced from the cooling gas flow-through path and discharges first treatment gas in which the concentration of the organic solvent is further reduced, and that introduces high-temperature gas to desorb the organic solvent from the first adsorption element and discharges first desorption gas; a first treatment gas flow-through path through which the first treatment gas flows; and a second concentrating apparatus that adsorbs, in a second adsorption element, the organic solvent contained in the first treatment gas introduced from the first treatment gas flow-through path and discharges second treatment gas in which the concentration of the organic solvent is further reduced, and that introduces high-temperature gas to desorb the organic solvent from the second adsorption element and discharges second desorption gas, wherein the cooling/condensing apparatus includes a heat exchanger that performs the cooling by exchanging heat with refrigerant, the organic solvent recovery system further includes a heat exchanger return path through which a remainder of the cooling treatment gas other than the part of the cooling treatment gas is returned to the heat exchanger, wherein the first desorption gas is returned to the cooling/condensing apparatus and the second desorption gas is returned to the heat exchanger return path.

According to an aspect of an organic solvent recovery system of the present disclosure, an organic solvent recovery system for recovering an organic solvent from exhaust gas containing the organic solvent and discharged from a production facility includes: a cooling/condensing apparatus that cools the exhaust gas containing the organic solvent to liquefy and condense the organic solvent and discharges cooling treatment gas in which a concentration of the organic solvent is reduced; a cooling gas flow-through path through which part of the cooling treatment gas flows; a first concentrating apparatus that adsorbs, in a first adsorption element, the organic solvent contained in the cooling treatment gas introduced from the cooling gas flow-through path and discharges first treatment gas in which the concentration of the organic solvent is further reduced, and that introduces high-temperature gas to desorb the organic solvent from the first adsorption element and discharges first desorption gas; a first treatment gas flow-through path through which the first treatment gas flows; and a second concentrating apparatus that adsorbs, in a second adsorption element, the organic solvent contained in the first treatment gas introduced from the first treatment gas flow-through path and discharges second treatment gas in which the concentration of the organic solvent is further reduced, and that introduces high-temperature gas to desorb the organic solvent from the second adsorption element and discharges second desorption gas, wherein the cooling/condensing apparatus includes a heat exchanger that performs the cooling by exchanging heat with refrigerant, the organic solvent recovery system further includes: a heat exchanger return path through which a remainder of the cooling treatment gas other than the part of the cooling treatment gas is returned to the heat exchanger; and a production facility return path through which part of the exhaust gas discharged from the production facility is returned to the production facility after passing through the heat exchanger, wherein the first desorption gas is returned to the cooling/condensing apparatus and the second desorption gas is returned to the production facility return path.

In the organic solvent recovery system, in the first concentrating apparatus, a plurality of the first adsorption elements are disposed in a peripheral direction with respect to a cylinder axis of a rotor that is rotatable with respect to the cylinder axis, the rotor having a hollow cylindrical shape.

In the organic solvent recovery system, in the second concentrating apparatus, the second adsorption element is disposed on an adsorption rotor that is rotatable with respect to a cylinder axis of the adsorption rotor, the adsorption rotor having a shape of disk.

### ADVANTAGEOUS EFFECTS OF INVENTION

According to the present disclosure, there can be provided an organic solvent recovery system capable of recovering an organic solvent from exhaust gas more efficiently.

### BRIEF DESCRIPTION OF DRAWINGS

Fig. 1 is a diagram schematically showing a configuration of an organic solvent recovery system in an embodiment 1A.
Fig. 2 is an exemplary diagram showing another configuration of the organic solvent recovery system in embodiment 1A.
Fig. 3 is an exemplary diagram showing still another configuration of the organic solvent recovery system in embodiment 1A.
Fig. 4 is a diagram schematically showing a configuration of an organic solvent recovery system in an embodiment 1B.
Fig. 5 is a diagram schematically showing a configuration of an organic solvent recovery system in an embodiment 2B.
Fig. 6 is a diagram schematically showing a configuration of an organic solvent recovery system in an embodiment 1C.
Fig. 7 is a diagram schematically showing a configuration of an organic solvent recovery system in an embodiment 2C.
Fig. 8 is a diagram schematically showing a configuration of an organic solvent recovery system in an embodiment 3C.
Fig. 9 is a diagram schematically showing a configuration of an organic solvent recovery system in an embodiment 4C.
Fig. 10 is a diagram schematically showing a configuration of an organic solvent recovery system in an embodiment 1D.
Fig. 11 is a diagram schematically showing a configuration of an organic solvent recovery system in an embodiment 2D.
Fig. 12 is a diagram schematically showing a configuration of an organic solvent recovery system in an embodiment 3D.
Fig. 13 is a diagram schematically showing a configuration of an organic solvent recovery system in an embodiment 4D.

### DESCRIPTION OF EMBODIMENTS

Hereinafter, organic solvent recovery systems in embodiments according to the present disclosure will be described with reference to figures. In each of the embodiments described below, when reference is made to number, amount, or the like, the scope of the present disclosure is not necessarily limited to the number, amount, or the like unless otherwise described particularly. The same or corresponding components are denoted by the same reference characters, and may not be described repeatedly. It is initially expected to appropriately combine and use configurations in the embodiments.

### [Embodiment 1A]

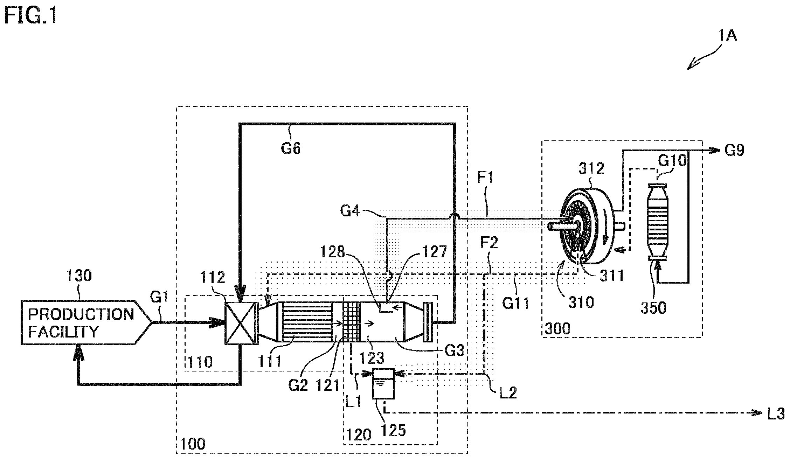

Fig. 1 is a diagram schematically showing a configuration of an organic solvent recovery system 1A in an embodiment 1A. Organic solvent recovery system 1A includes a cooling/condensing apparatus 100, a concentrating apparatus 300, a first flow-through path F1, and a second flow-through path F2.

Cooling/condensing apparatus 100 has a cooling portion 110, a separation portion 120, and a chamber 123. Exhaust gas G1 containing an organic solvent passes through cooling portion 110 and is accordingly cooled, with the result that the organic solvent is liquefied and condensed. Next, exhaust gas G2 passes through separation portion 120 and is accordingly separated into liquefied/condensed cooled condensate liquid L1 and cooling treatment gas G3 in which the concentration of the organic solvent is reduced. Finally, part (adsorption inlet gas) G4 of the cooling treatment gas is distributed to be supplied to concentrating apparatus 300 through chamber 123, and is discharged from cooling/condensing apparatus 100.

Cooling means and configuration of cooling portion 110 are not particularly limited, but may be a first heat exchanger 111 or the like that performs cooling by indirect heat exchange between the exhaust gas and refrigerant such as cooling water, cold water, or brine. Conditions such as a cooling temperature may be appropriately determined in accordance with the organic solvent to be recovered.

Further, in cooling portion 110, a second heat exchanger 112 may be provided to precede first heat exchanger 111 so as to cool exhaust gas G1 by heat exchange between a remainder (return gas) G6 of the cooling treatment gas and exhaust gas G1. This is because heat transfer area and amount of refrigerant required for first heat exchanger 111 are reduced.

Separation means and configuration of separation portion 120 are not particularly limited, and may be a reticulated structure 121 that captures droplets when exposed to droplets, such as a demister, a filter, or a mesh. Cooled condensate liquid L1 captured in reticulated structure 121 is collected by gravity into a tank 125 disposed below reticulated structure 121, and is recovered as recovered liquid L3.

Chamber 123 is a structure having a certain volume of space. The cooling treatment gas is divided into part (adsorption inlet gas) G4 of the cooling treatment gas to be supplied to concentrating apparatus 300 and remainder (return gas) G6 of the cooling treatment gas. Chamber 123 has a partition portion 128 that enables suction of the cooling treatment gas into first flow-through path F1 in a direction opposite to the discharging direction of cooling treatment gas G3 discharged from reticulated structure 121.

Concentrating apparatus 300 has an adsorption element 310 including an adsorption material that adsorbs the organic solvent contained in the gas when exposed to the gas and that desorbs the adsorbed organic solvent when exposed to heated gas. Further, adsorption element 310 includes a desorption portion (desorption zone) 311 and an adsorption portion (adsorption zone) 312. In adsorption portion 312, when part (adsorption inlet gas) G4 of the cooling treatment gas is introduced, the adsorption material is exposed to part (adsorption inlet gas) G4 of the cooling treatment gas, with the result that the organic solvent contained in part (adsorption inlet gas) G4 of the cooling treatment gas is adsorbed in the adsorption material. Accordingly, part (adsorption inlet gas) G4 of the cooling treatment gas is cleaned and clean gas G9 is discharged.

In desorption portion 311, when gas G10 having a temperature higher than that of part (adsorption inlet gas) G4 of the cooling treatment gas is introduced into the adsorption material, the organic solvent is desorbed from the adsorption material, with the result that desorption gas G11 containing the organic solvent is discharged.

As the adsorption material contained in adsorption element 310, activated alumina, silica gel, activated carbon material or zeolite have been widely used. Among them, activated carbon and hydrophobic zeolite are particularly suitably used. The activated carbon and hydrophobic zeolite are excellent in terms of a function of adsorbing and desorbing a low-concentration organic compound, and have been conventionally used as an adsorption material in various types of apparatuses.

Although the specific configuration of the concentrating apparatus in the embodiment is not particularly limited, the following configuration has been known: as shown in Fig. 1, the concentrating apparatus includes a rotation shaft and an adsorption element 310 provided around the rotation shaft, wherein when adsorption element 310 is rotated with respect to the rotation shaft, the adsorption material having adsorbed the organic solvent contained in part (adsorption inlet gas) G4 of the cooling treatment gas is continuously moved to desorption portion 311 in adsorption portion 312.

In concentrating apparatus 300 in the embodiment, desorption portion 311 is preferably disposed below adsorption portion 312 as shown in Fig. 1. This is due to the following reason: even when part of the organic solvent contained in desorption gas G11 is liquefied and condensed to generate desorbed condensate liquid L2, desorbed condensate liquid L2 is less likely to be adhered to adsorption portion 312. Desorbed condensate liquid L2 falls downward from desorption portion 311, and is recovered along the inner surface of the exterior of the desorption portion or the like. More preferably, as shown in Fig. 1, desorption portion 311 is inclined downward. This is because desorbed condensate liquid L2 is more likely to fall downward.

Concentrating apparatus 300 may have a purging portion (not shown) to which a portion of the adsorption material having completed the desorption treatment in desorption portion 311 is moved before being moved to adsorption portion 312. Part of clean gas G9 may be introduced into the purging portion, and purging portion outlet gas discharged from the purging portion may be introduced into adsorption portion 312. This is due to the following reason: by purging the adsorption material having completed the desorption with clean gas G9, desorption gas G11 remaining in the adsorption material can be prevented from being mixed into clean gas G9 and the adsorption material can be cooled.

In concentrating apparatus 300, high-temperature gas G10 used for the desorption is preferably gas obtained by heating part of clean gas G9 to have a high temperature by using heating means such as a regenerative heater 350. This is because an amount of the organic-solvent-containing gas to be treated is not increased in adsorption portion 312. When exhaust gas G1 has a temperature of 50 to 200°C, part of exhaust gas G1 is more preferably heated by regenerative heater 350 or the like for the sake of use. This is due to the following reason: by using exhaust gas G1 having a high temperature for the desorption, utility of regenerative heater 350 can be decreased, with the result that regenerative heater 350 becomes unnecessary for the desorption depending on the temperature of exhaust gas G1. Further, a ratio at which exhaust gas G1 is permitted to pass to cooling/condensing apparatus 100 is assumed to be 0% to 50%, whereas a ratio at which desorption gas G11 is permitted to pass to cooling/condensing apparatus 100 is assumed to be 50% to 100%.

First flow-through path F1 is a region through which part (adsorption inlet gas) G4 of the cooling treatment gas is introduced from chamber 123 to concentrating apparatus 300. A connection opening of first flow-through path F1 to chamber 123 is preferably a ceiling portion 127 of chamber 123. This is due to the following reason: a small amount of droplets that could not be captured by separation portion 120 are suppressed from entering concentrating apparatus 300 so as to prevent performance and strength from being decreased due to wetting of below-described adsorption element 310 of concentrating apparatus 300. More preferably, partition portion 128 is provided to draw part (adsorption inlet gas) G4 of the cooling treatment gas in a direction opposite to the gas-flow direction of cooling treatment gas G3. The entrance of droplets can be further prevented. In addition, a droplet entrance prevention member similar to reticulated structure 121 described above may be provided at a drawing opening for part (adsorption inlet gas) G4 of the cooling treatment gas, or a heater may be provided to vaporize droplets.

Second flow-through path F2 is a region through which desorption gas G11 is returned to an exhaust gas G1 introduction portion of cooling/condensing apparatus 100. Second flow-through path F2 is preferably connected thereto such that desorption portion 311 is disposed above a position of confluence of desorption gas G11 and exhaust gas G1 supplied to cooling/condensing apparatus 100. This is because desorbed condensate liquid L2 generated from desorption gas G11 of concentrating apparatus 300 is facilitated to be moved to cooling/condensing apparatus 100. More preferably, second flow-through path F2 is configured to communicate with two positions of cooling/condensing apparatus 100, i.e., the exhaust gas G1 introduction portion and tank 125. This is because desorbed condensate liquid L2 generated from desorption gas G11 is facilitated to be recovered directly into tank 125.

High-temperature gas G10 used for the desorption in concentrating apparatus 300 of organic solvent recovery system 1A in the embodiment is preferably gas obtained by heating part of clean gas G9 to have a high temperature using heating means such as regenerative heater 350 as described above; however, when exhaust gas G1 has a temperature of 50 to 200°C, part of exhaust gas G1 is more preferably heated by regenerative heater 350 or the like for the sake of use. This is due to the following reason: by using the exhaust gas having a high temperature for the desorption, utility of regenerative heater 350 can be decreased, with the result that regenerative heater 350 becomes unnecessary for the desorption depending on the temperature of exhaust gas G1. Further, a ratio at which exhaust gas G1 is permitted to pass to cooling/condensing apparatus 100 is assumed to be 0% to 50%, whereas a ratio at which desorption gas G11 is permitted to pass to cooling/condensing apparatus 100 is assumed to be 50% to 100%.

When exhaust gas G1 is gas discharged from a production facility 130, remainder (return gas) G6 of the cooling treatment gas may be returned to production facility 130.

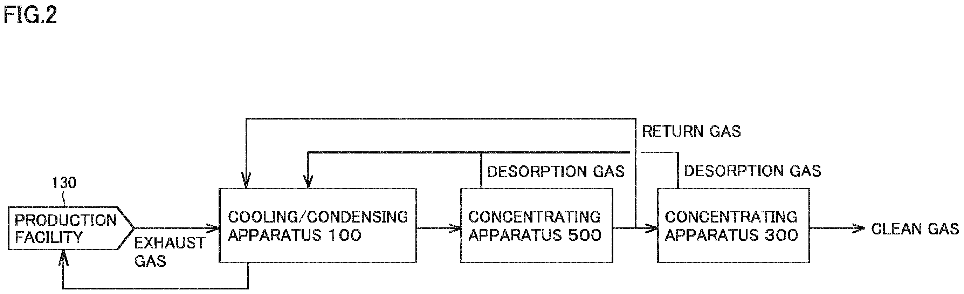

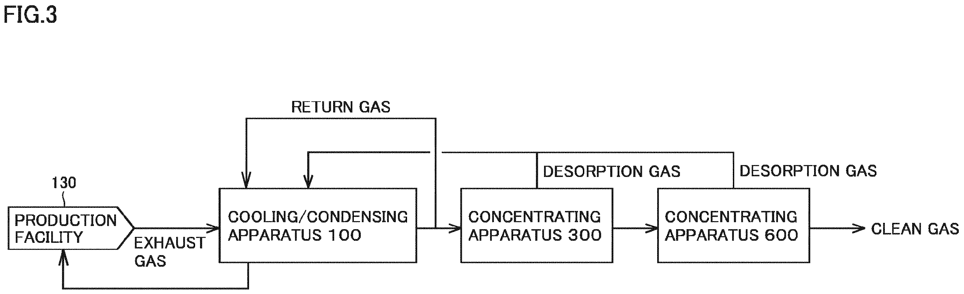

When it is desired to further reduce the concentration of the organic solvent contained in remainder (return gas) G6 of the cooling treatment gas, a concentrating apparatus 500 may be additionally provided to treat remainder (return gas) G6 of the cooling treatment gas as shown in Fig. 2. Further, when it is desired to further reduce the concentration of the organic solvent contained in clean gas G9, a concentrating apparatus 600 may be additionally provided to treat clean gas G9 as shown in Fig. 3. Each of concentrating apparatus 500 and concentrating apparatus 600 may be the same as or different from concentrating apparatus 300 in terms of configuration. The number of concentrating apparatuses additionally provided is not limited. Desorption gas discharged from any of the concentrating apparatuses is returned to the exhaust gas G1 introduction portion of cooling/condensing apparatus 100 via second flow-through path F2.

In the embodiment, the organic solvent contained in exhaust gas G1 is an organic solvent that can be liquefied and recovered by cooling at 1°C to 50°C. Examples of the organic solvent include N-methyl-2-pyrrolidone, N-ethyl-2-pyrrolidone, N,N-dimethylformamide, N,N-dimethylacetamide, and n-decane. These are illustrative and are not restrictive. One type or a plurality of types of organic solvents may be contained.

### [Embodiment 1B]

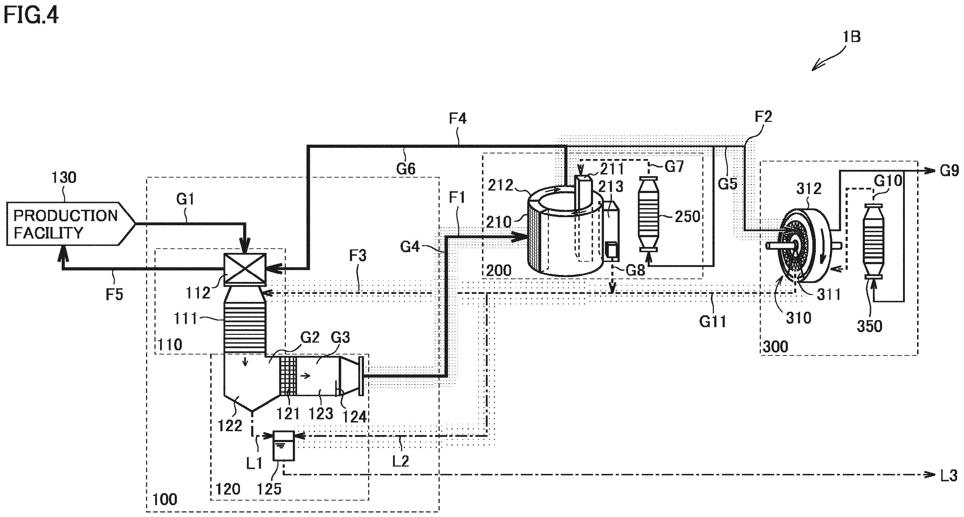

Fig. 4 is a diagram schematically showing a configuration of an organic solvent recovery system 1B in an embodiment 1B. Organic solvent recovery system 1B includes a cooling/condensing apparatus 100, a first concentrating apparatus 200, a second concentrating apparatus 300, and various types of flow-through paths.

Cooling/condensing apparatus 100 has a cooling portion 110 and a separation portion 120. Exhaust gas G1 containing an organic solvent is discharged from a production facility 130. Exhaust gas G1 passes through cooling portion 110 and is accordingly cooled. With the passage of exhaust gas G1 through cooling portion 110, the organic solvent is liquefied and condensed.

Exhaust gas G2 having passed through cooling portion 110 passes through separation portion 120 and is accordingly separated into liquefied/condensed cooled condensate liquid L1 and cooling treatment gas G3 in which the concentration of the organic solvent is reduced. Cooling treatment gas G3 is discharged from cooling/condensing apparatus 100 to first concentrating apparatus 200 through chamber 123 as cooling treatment gas G4.

Cooling means and configuration of cooling portion 110 are not particularly limited. In embodiment 1B, a first heat exchanger 111 that performs cooling by indirect heat exchange between the exhaust gas and refrigerant such as cooling water, cold water, or brine is used. First heat exchanger 111 is positioned to allow exhaust gas G1 to flow in the upward/downward direction.

In cooling portion 110, a below-described second heat exchanger 112 is provided to precede first heat exchanger 111 so as to cool exhaust gas G1 by heat exchange between cooling treatment gas G6 and exhaust gas G1. With second heat exchanger 112, heat transfer area and amount of refrigerant required for first heat exchanger 111 can be reduced. Exhaust gas G1 and part of cooling treatment gas G6 are returned to production facility 130 through a fifth flow-through path F5. Conditions such as cooling temperatures in first heat exchanger 111 and second heat exchanger 112 may be appropriately determined in accordance with the organic solvent to be recovered.

Separation means and configuration of separation portion 120 are not particularly limited. In embodiment IB, a reticulated structure 121 is used to capture droplets when exposed to the droplets, such as a demister, a filter, or a mesh. Separation portion 120 has a funnel-shaped receiving portion 122 that receives cooled condensate liquid L1 containing the organic solvent and cooled by cooling portion 110. Cooled condensate liquid L1 cooled by cooling portion 110 and cooled condensate liquid L1 captured in reticulated structure 121 flow into receiving portion 122 due to gravity, are then collected in tank 125 disposed below receiving portion 122, and are recovered as recovered liquid L3.

Chamber 123 is a structure having a certain volume of space. A weir 124 is provided in chamber 123. Weir 124 prevents part of cooled condensate liquid L1 from being moved in a direction toward the front end of chamber 123 and from flowing through a first flow-through path F1 serving as a cooling gas flow-through path. Weir 124 serves to securely recover cooled condensate liquid L1. Cooling treatment gas G3 stored in chamber 123 for a certain period of time flows through first flow-through path F1 as cooling treatment gas G4, and is supplied to first concentrating apparatus 200.

Organic solvent recovery system 1B is structured such that when viewed along a direction in which exhaust gas G1 flows, a direction of flow from reticulated structure 121 to chamber 123 in separation portion 120 intersects a direction of flow from cooling portion 110 to separation portion 120 so as to allow exhaust gas G1 (exhaust gas G2, cooling treatment gas G3) to flow in a direction of L shape.

In organic solvent recovery system 1B, a portion constituted of cooling portion 110 and separation portion 120 has the L-shaped structure, so that first concentrating apparatus 200 and second concentrating apparatus 300 can be suppressed from being exposed to droplets or airborne droplets. When each of first concentrating apparatus 200 and second concentrating apparatus 300 is exposed thereto and the adsorption material is accordingly wet, decreased strength or breakage may be resulted. Since organic solvent recovery system 1B has the L-shaped structure, each of first concentrating apparatus 200 and second concentrating apparatus 300 can be prevented from being decreased in strength and broken.

First concentrating apparatus 200 has an adsorption rotor 212 including an adsorption material that adsorbs the organic solvent contained in the gas when exposed to the gas and that desorbs the adsorbed organic solvent when exposed to heated gas. Adsorption rotor 212 includes a plurality of adsorption units 210 partitioned by a plurality of partition portions. With the plurality of adsorption units 210, adsorption rotor 212 has a hollow cylindrical shape as a whole. Adsorption rotor 212 is installed in a treatment chamber and is provided to allow fluid to flow in a radial direction. Adsorption rotor 212 is provided to be rotatable with respect to a cylinder axis thereof by receiving rotational driving force of a motor.

In first concentrating apparatus 200, part of adsorption units 210 constitute an adsorption portion that adsorbs the organic solvent contained in cooling treatment gas G4 supplied from the outside of adsorption units 210 toward the inside of adsorption units 210, and the remainder of adsorption units 210 constitute a desorption portion that desorbs the organic solvent adsorbed in adsorption units 210 from adsorption units 210 by supplying heated air from the inside of adsorption units 210 toward the outside of adsorption units 210.

For cleaning, cooling treatment gas G4 supplied into the treatment chamber is introduced into the adsorption portion from the outer peripheral surface of adsorption rotor 212. When cooling treatment gas G4 introduced into the adsorption portion passes through adsorption rotor 212 from the outer peripheral surface toward the inner peripheral surface along the radial direction, cooling treatment gas G4 is cleaned by adsorbing the organic solvent in the plurality of adsorption units 210 located in the adsorption portion.

Cooling treatment gas G5 and cooling treatment gas G6 each serving as cleaned and treated fluid are discharged as clean gas from the upper portions of adsorption units 210. Part of the discharged clean gas flows through a second flow-through path F2 as cooling treatment gas G5 and is supplied to second concentrating apparatus 300. Part of the discharged clean gas flows through a fourth flow-through path F4 as cooling treatment gas G6, and is returned to second heat exchanger 112.

An inner peripheral side flow path forming member 211 and an outer peripheral side flow path forming member 213 are arranged to face each other on the inner peripheral side and outer peripheral side of adsorption rotor 212 so as to sandwich a portion of adsorption rotor 212 in the peripheral direction. A region of adsorption rotor 212 sandwiched by inner peripheral side flow path forming member 211 and outer peripheral side flow path forming member 213 is the desorption portion.

In order to desorb the organic solvent, high-temperature gas G7, which is obtained by heating part of cooling treatment gas G5 using a regenerative heater 250, is introduced from inner peripheral side flow path forming member 211 to the desorption portion. When high-temperature gas G7 introduced into the desorption portion passes through adsorption rotor 212, the organic solvent adsorbed in the plurality of adsorption units 210 located in the desorption portion is desorbed by heat from the plurality of adsorption units 210. Desorption gas G8 containing the organic solvent is discharged as concentrated gas from the desorption portion to the outside of the treatment chamber through outer peripheral side flow path forming member 213 and is returned to a third flow-through path F3. Part of the organic solvent contained in desorption gas G8 is liquefied and condensed and is collected in tank 125 as desorbed condensate liquid L2.

Third flow-through path F3 is a region through which desorption gas G8 and below-described desorption gas G11 are returned to the exhaust gas G1 introduction portion of cooling/condensing apparatus 100. Third flow-through path F3 is preferably connected thereto such that the desorption portion is disposed above a position of confluence of the desorption gas and exhaust gas G1 supplied to cooling/condensing apparatus 100. This is because desorbed condensate liquid L2 generated from desorption gas G8 of first concentrating apparatus 200 and desorption gas G11 of second concentrating apparatus 300 is facilitated to be moved to cooling/condensing apparatus 100. Third flow-through path F3 is preferably configured to communicate with two positions of cooling/condensing apparatus 100, i.e., the exhaust gas G1 introduction portion and tank 125. This is because desorbed condensate liquid L2 generated from desorption gas G8 and desorption gas G11 is facilitated to be recovered directly into tank 125.

In first concentrating apparatus 200, the adsorption treatment for the target substance is performed on adsorption units 210 located in the adsorption portion, and the desorption treatment for the target substance is performed on adsorption units 210 located in the desorption portion after the adsorption treatment. Since adsorption rotor 212 is rotated with respect to the cylinder axis, each adsorption unit 210 is moved alternately between the desorption portion and the adsorption portion, thereby continuously performing the adsorption treatment and desorption treatment for the target substance.

As a material of the adsorption element included in adsorption unit 210, activated alumina, silica gel, activated carbon material, zeolite, or the like can be used. The shape of the adsorption element in adsorption unit 210 is not particularly limited, and may be, for example, as follows: a sheet containing the activated carbon material or zeolite is formed in the form of a honeycomb, or activated carbon fiber nonwoven fabrics are layered.

Second concentrating apparatus 300 has an adsorption element 310 including an adsorption material that adsorbs the organic solvent contained in the gas when exposed to the gas and that desorbs the adsorbed organic solvent when exposed to heated gas. Adsorption element 310 includes a desorption portion (desorption zone) 311 and an adsorption portion (adsorption zone) 312. In adsorption portion 312, when cooling treatment gas G5 is introduced, the adsorption material is exposed to cooling treatment gas G5, with the result that the organic solvent contained in cooling treatment gas G5 is adsorbed in the adsorption material. Accordingly, cooling treatment gas G5 is cleaned and clean gas G9 is discharged.

In desorption portion 311, when high-temperature gas G10 having a temperature higher than that of cooling treatment gas G5 is introduced into the adsorption material, the organic solvent is desorbed from the adsorption material, with the result that desorption gas G11 containing the organic solvent is discharged.

As the adsorption material contained in adsorption element 310, activated alumina, silica gel, activated carbon material and zeolite have been widely used. Among them, activated carbon and hydrophobic zeolite are particularly suitably used.

As shown in Fig. 4, second concentrating apparatus 300 includes a rotation shaft and an adsorption element 310 provided around the rotation shaft. Second concentrating apparatus 300 is configured to rotate adsorption element 310 with respect to the rotation shaft so as to continuously move, to desorption portion 311, the adsorption material having adsorbed the organic solvent contained in cooling treatment gas G5 introduced from second flow-through path F2 in adsorption portion 312.

In second concentrating apparatus 300, desorption portion 311 is preferably disposed below adsorption portion 312 as shown in Fig. 4. This is due to the following reason: even when part of the organic solvent contained in desorption gas G11 is liquefied and condensed to generate desorbed condensate liquid L2, desorbed condensate liquid L2 is less likely to be adhered to adsorption portion 312. Desorbed condensate liquid L2 falls downward from desorption portion 311 and is recovered along the inner surface of the exterior of the desorption portion or the like. More preferably, desorption portion 311 is inclined downward in order to further facilitate desorbed condensate liquid L2 to fall downward.

Second concentrating apparatus 300 may have a cleaning portion (purging portion) to which a portion of the adsorption material having completed the desorption treatment in desorption portion 311 is moved before being moved to adsorption portion 312. Part of clean gas G9 may be introduced into the purging portion, and purging portion outlet gas discharged from the purging portion may be introduced into adsorption portion 312. This is due to the following reason: by cleaning the adsorption material having completed the desorption with clean gas G9, desorption gas G11 remaining in the adsorption material can be prevented from being mixed into clean gas G9 and the adsorption material can be cooled.

High-temperature gas G10 used for the desorption is preferably gas obtained by heating part of clean gas G9 to have a high temperature by using heating means such as a regenerative heater 350. This is because an amount of the organic-solvent-containing gas to be treated is not increased in adsorption portion 312.

### [Embodiment 2B]

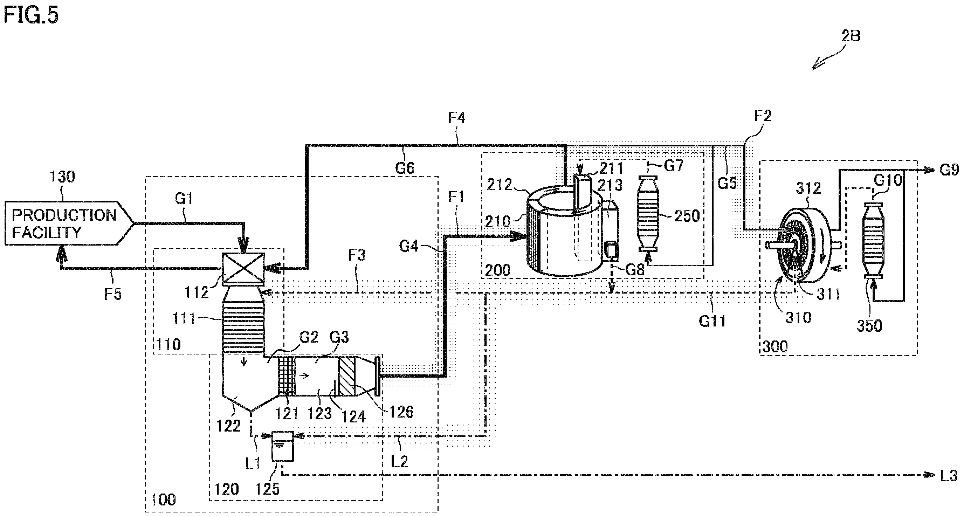

Fig. 5 is a diagram schematically showing a configuration of an organic solvent recovery system 2B in an embodiment 2B. Organic solvent recovery system 2B includes a cooling/condensing apparatus 100, a first concentrating apparatus 200, a second concentrating apparatus 300, and various types of flow-through paths. Organic solvent recovery system 2B is the same as organic solvent recovery system 1B of embodiment 1B except that a heater 126 is provided in chamber 123.

Heater 126 slightly heats cooled cooling treatment gas G3. Since cooling treatment gas G3 is slightly heated, the organic solvent or moisture can be prevented from being condensed.

### [Functions and Effects]

Cooling/condensing apparatus 100 in the present embodiment includes: cooling portion 110 through which exhaust gas G1 flows; and separation portion 120 located on the downstream side with respect to cooling portion 110 when viewed along the direction in which exhaust gas G1 flows. Separation portion 120 has: receiving portion 122 that receives cooled condensate liquid L1 containing the organic solvent and cooled by cooling portion 110; reticulated structure 121 that separates cooled exhaust gas G2 into cooled condensate liquid L1 and cooling treatment gas G3 when exposed to cooled exhaust gas G2; and chamber 123 that stores, for a certain period of time, cooling treatment gas G3 after passing through reticulated structure 121.

When viewed along the direction in which exhaust gas G1 flows, the direction of flow from reticulated structure 121 to chamber 123 in separation portion 120 intersects the direction of flow from cooling portion 110 to separation portion 120 so as to allow the exhaust gas to flow in the direction of L shape. Thus, cooled condensate liquid L1 containing the organic solvent can be recovered from exhaust gas G1 more efficiently. In the organic solvent recovery system in the present embodiment, a portion constituted of cooling portion 110 and separation portion 120 has the L-shaped structure, so that first concentrating apparatus 200 and second concentrating apparatus 300 provided at subsequent stages can be suppressed from being exposed to droplets or airborne droplets.

Heater 126 is disposed on the downstream side with respect to reticulated structure 121 in the present embodiment so as to heat cooling treatment gas G3. Thus, since cooling treatment gas G3 is slightly heated, the organic solvent or moisture can be prevented from being condensed.

Weir 124 is provided in chamber 123 in the present embodiment. Thus, cooled condensate liquid L1 can be prevented from flowing into first flow-through path F 1 serving as the cooling gas flow-through path.

The concentrating apparatus in the present embodiment includes first concentrating apparatus 200 and second concentrating apparatus 300 located on the downstream side with respect to first concentrating apparatus 200. First concentrating apparatus 200 adsorbs, in adsorption units 210, the organic solvent contained in cooling treatment gas G4 introduced from first flow-through path F1 and discharges cooling treatment gas G5 in which the concentration of the organic solvent is further reduced, and introduces high-temperature gas G7 to desorb the organic solvent from adsorption units 210 and discharges desorption gas G8.

The organic solvent recovery system in the present embodiment further includes second flow-through path F2 through which part of cooling treatment gas G5 flows, wherein second concentrating apparatus 300 absorbs, in adsorption element 310, the organic solvent contained in cooling treatment gas G5 introduced from second flow-through path F2 and discharges clean gas G9 in which the concentration of the organic solvent is further reduced, and introduces high-temperature gas G10 to desorb the organic solvent from adsorption element 310 and discharges desorption gas G11.

In first concentrating apparatus 200 in the present embodiment, the plurality of adsorption units 210 are disposed in the peripheral direction with respect to the cylinder axis of the rotor that is rotatable with respect to the cylinder axis, the rotor having a hollow cylindrical shape. Thus, the organic solvent can be recovered with high efficiency.

In second concentrating apparatus 300 in the present embodiment, adsorption element 310 is disposed on the adsorption rotor that is rotatable with respect to the cylinder axis of the adsorption rotor, the adsorption rotor having a shape of disk. Thus, the organic solvent can be recovered with high efficiency.

### [Other Embodiments]

In the above-described embodiments, the concentrating apparatus employs the two concentrating apparatuses, i.e., first concentrating apparatus 200 and second concentrating apparatus 300. The concentrating apparatus may employ two first concentrating apparatuses 200 or two second concentrating apparatuses 300 in accordance with an amount of gas. Further, three or more concentrating apparatuses may be employed in accordance with removal efficiency.

The organic solvent contained in exhaust gas G1 is an organic solvent that can be liquefied and recovered by cooling at 1°C to 50°C. Examples of the organic solvent include N-methyl-2-pyrrolidone, N-ethyl-2-pyrrolidone, N,N-dimethylformamide, N,N-dimethylacetamide, and n-decane. These are illustrative and not restrictive. One type or a plurality of types of organic solvents may be contained.

### [Embodiment 1C]

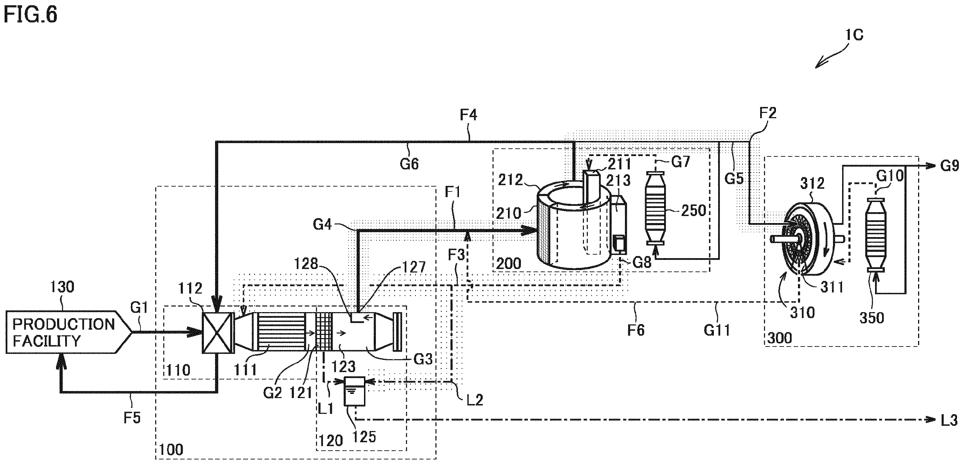

Fig. 6 is a diagram schematically showing a configuration of an organic solvent recovery system 1C in an embodiment 1C. Organic solvent recovery system 1C includes a cooling/condensing apparatus 100, a first concentrating apparatus 200, a second concentrating apparatus 300, and various types of flow-through paths.

Cooling/condensing apparatus 100 includes a cooling portion 110 and a separation portion 120. Exhaust gas G1 containing an organic solvent is discharged from a production facility 130. Exhaust gas G1 passes through cooling portion 110 and is accordingly cooled. With the passage of exhaust gas G1 through cooling portion 110, the organic solvent is liquefied and condensed.

Exhaust gas G2 having passed through cooling portion 110 passes through separation portion 120 and is accordingly separated into liquefied/condensed cooled condensate liquid L1 and cooling treatment gas G3 in which the concentration of the organic solvent is reduced. Cooling treatment gas G3 is discharged from cooling/condensing apparatus 100 to first concentrating apparatus 200 through chamber 123 as cooling treatment gas G4.

Cooling means and configuration of cooling portion 110 are not particularly limited. In embodiment 1C, a first heat exchanger 111 that performs cooling by indirect heat exchange between the exhaust gas and refrigerant such as cooling water, cold water, or brine is used. First heat exchanger 111 is positioned to allow exhaust gas G1 to flow in the horizontal direction.

In cooling portion 110, a below-described second heat exchanger 112 is provided to precede first heat exchanger 111 so as to cool exhaust gas G1 by heat exchange between cooling treatment gas G6 and exhaust gas G1. With second heat exchanger 112, heat transfer area and amount of refrigerant required for first heat exchanger 111 can be reduced. Exhaust gas G1 and part of cooling treatment gas G6 are returned to production facility 130 through a fifth flow-through path F5. Conditions such as cooling temperatures in first heat exchanger 111 and second heat exchanger 112 may be appropriately determined in accordance with the organic solvent to be recovered.

Separation means and configuration of separation portion 120 are not particularly limited. In embodiment 1C, a reticulated structure 121 is used to capture droplets when exposed to the droplets, such as a demister, a filter, or a mesh. Cooled condensate liquid L1 captured in reticulated structure 121 is collected by gravity into a tank 125 disposed below reticulated structure 121, and is recovered as recovered liquid L3.

Chamber 123 is a structure having a certain volume of space. Cooling treatment gas G3 stored in chamber 123 for a certain period of time flows through a first flow-through path F1 as cooling treatment gas G4, and is supplied to first concentrating apparatus 200. Chamber 123 has a partition portion 128 that enables suction of the cooling treatment gas into first flow-through path F1 in a direction opposite to the discharging direction of cooling treatment gas G3 discharged from reticulated structure 121.

First flow-through path F1 is a region through which cooling treatment gas G4 is introduced from chamber 123 to first concentrating apparatus 200. A connection opening of first flow-through path F1 to chamber 123 is preferably a ceiling portion 127 of chamber 123. Accordingly, a small amount of droplets that could not be captured by separation portion 120 are suppressed from entering first concentrating apparatus 200 so as to prevent performance and strength from being decreased due to wetting of a below-described adsorption unit 210 of first concentrating apparatus 200. More preferably, cooling treatment gas G4 is drawn in a direction opposite to the gas-flow direction of cooling treatment gas G3. Thus, the entrance of droplets can be further prevented. In addition, a droplet entrance prevention member similar to reticulated structure 121 described above may be provided at a drawing opening for cooling treatment gas G4, or a heater may be provided to vaporize droplets.

First concentrating apparatus 200 has an adsorption rotor 212 including an adsorption material that adsorbs the organic solvent contained in the gas when exposed to the gas and that desorbs the adsorbed organic solvent when exposed to heated gas. Adsorption rotor 212 includes a plurality of adsorption units 210 partitioned by a plurality of partition portions. With the plurality of adsorption units 210, adsorption rotor 212 has a hollow cylindrical shape as a whole. Adsorption rotor 212 is installed in a treatment chamber and is provided to allow fluid to flow in a radial direction. Adsorption rotor 212 is provided to be rotatable with respect to a cylinder axis thereof by receiving rotational driving force of a motor.

In first concentrating apparatus 200, part of adsorption units 210 constitute an adsorption portion that adsorbs the organic solvent contained in cooling treatment gas G4 supplied from the outside of adsorption units 210 toward the inside of adsorption units 210, and the remainder of adsorption units 210 constitute a desorption portion that desorbs the organic solvent adsorbed in adsorption units 210 from adsorption units 210 by supplying heated air from the inside of adsorption units 210 toward the outside of adsorption units 210.

For cleaning, cooling treatment gas G4 supplied into the treatment chamber is introduced into the adsorption portion from the outer peripheral surface of adsorption rotor 212. When cooling treatment gas G4 introduced into the adsorption portion passes through adsorption rotor 212 from the outer peripheral surface toward the inner peripheral surface along the radial direction, cooling treatment gas G4 is cleaned by adsorbing the organic solvent in the plurality of adsorption units 210 located in the adsorption portion.

Cooling treatment gas G5 and cooling treatment gas G6 each serving as cleaned and treated fluid are discharged as clean gas from the upper portions of adsorption units 210. Part of the discharged clean gas flows through a second flow-through path F2 as cooling treatment gas G5 and is supplied to second concentrating apparatus 300. Part of the discharged clean gas flows through a fourth flow-through path F4 as cooling treatment gas G6, and is returned to second heat exchanger 112.

An inner peripheral side flow path forming member 211 and an outer peripheral side flow path forming member 213 are arranged to face each other on the inner peripheral side and outer peripheral side of adsorption rotor 212 so as to sandwich a portion of adsorption rotor 212 in the peripheral direction. A region of adsorption rotor 212 sandwiched between inner peripheral side flow path forming member 211 and outer peripheral side flow path forming member 213 is the desorption portion.

In order to desorb the organic solvent, high-temperature gas G7, which is obtained by heating part of cooling treatment gas G5 using regenerative heater 250, is introduced from inner peripheral side flow path forming member 211 to the desorption portion. When high-temperature gas G7 introduced into the desorption portion passes through adsorption rotor 212, the organic solvent adsorbed in the plurality of adsorption units 210 located in the desorption portion is desorbed by heat from the plurality of adsorption units 210. Desorption gas G8 containing the organic solvent is discharged as concentrated gas from the desorption portion to the outside of the treatment chamber through outer peripheral side flow path forming member 213 and is returned to a third flow-through path F3. Part of the organic solvent contained in desorption gas G8 is liquefied and condensed and is collected in tank 125 as desorbed condensate liquid L2.

Third flow-through path F3 is a region through desorption gas G8 is returned to the exhaust gas G1 introduction portion of cooling/condensing apparatus 100. Third flow-through path F3 is preferably connected thereto such that the desorption portion is disposed above a position of confluence of desorption gas G8 and exhaust gas G1 supplied to cooling/condensing apparatus 100. With this configuration, desorbed condensate liquid L2 generated from desorption gas G8 of first concentrating apparatus 200 is facilitated to be moved to cooling/condensing apparatus 100. Third flow-through path F3 is preferably configured to communicate with two positions of cooling/condensing apparatus 100, i.e., the exhaust gas G1 introduction portion and tank 125. With this configuration, desorbed condensate liquid L2 generated from desorption gas G8 is facilitated to be recovered directly into tank 125.

In first concentrating apparatus 200, the adsorption treatment for the target substance is performed on adsorption units 210 located in the adsorption portion, and the desorption treatment for the target substance is performed on adsorption units 210 located in the desorption portion after the adsorption treatment. Since adsorption rotor 212 is rotated with respect to the cylinder axis, each adsorption unit 210 is moved alternately between the desorption portion and the adsorption portion, thereby continuously performing the adsorption treatment and desorption treatment for the target substance.

As a material of the adsorption element included in adsorption unit 210, activated alumina, silica gel, activated carbon material, zeolite, or the like can be used. The shape of the adsorption element in adsorption unit 210 is not particularly limited, and may be, for example, as follows: a sheet containing the activated carbon material or zeolite is formed in the form of a honeycomb, or activated carbon fiber nonwoven fabrics are layered.

Second concentrating apparatus 300 has an adsorption element 310 including an adsorption material that adsorbs the organic solvent contained in the gas when exposed to the gas and that desorbs the adsorbed organic solvent when exposed to heated gas. Adsorption element 310 includes a desorption portion (desorption zone) 311 and an adsorption portion (adsorption zone) 312. In adsorption portion 312, when cooling treatment gas G5 is introduced, the adsorption material is exposed to cooling treatment gas G5, with the result that the organic solvent contained in cooling treatment gas G5 is adsorbed in the adsorption material. Accordingly, cooling treatment gas G5 is cleaned and clean gas G9 is discharged.

In desorption portion 311, when high-temperature gas G10 having a temperature higher than that of cooling treatment gas G5 is introduced into the adsorption material, the organic solvent is desorbed from the adsorption material, with the result that desorption gas G11 containing the organic solvent is discharged. Desorption gas G11 is returned to first flow-through path F1 through a sixth flow-through path F6.

In organic solvent recovery system 1C, desorption gas G11 is returned to first flow-through path F1, so that it is not necessary to treat an amount of gas corresponding to desorption gas G11 in cooling/condensing apparatus 100. Therefore, organic solvent recovery system 1C can contribute to downsizing and energy saving of cooling/condensing apparatus 100. Since desorption gas G11 has a high temperature, NMP (N-methyl-2-pyrrolidone), moisture, or the like contained in cooling treatment gas G4 can be suppressed from being condensed in organic solvent recovery system 1C.

As the adsorption material contained in adsorption element 310, activated alumina, silica gel, activated carbon material and zeolite have been widely used. Among them, activated carbon and hydrophobic zeolite are particularly suitably used.

As shown in Fig. 6, second concentrating apparatus 300 includes a rotation shaft and an adsorption element 310 provided around the rotation shaft. Second concentrating apparatus 300 is configured to rotate adsorption element 310 with respect to the rotation axis so as to continuously move, to desorption portion 311, the adsorption material having adsorbed the organic solvent contained in cooling treatment gas G5 introduced from second flow-through path F2 in adsorption portion 312.

Second concentrating apparatus 300 may have a cleaning portion (purging portion) to which a portion of the adsorption material having completed the desorption treatment in desorption portion 311 is moved before being moved to adsorption portion 312. Part of clean gas G9 may be introduced into the purging portion, and purging portion outlet gas discharged from the purging portion may be introduced into adsorption portion 312. This is due to the following reason: by cleaning the adsorption material having completed the desorption with clean gas G9, desorption gas G11 remaining in the adsorption material can be prevented from being mixed into clean gas G9 and the adsorption material can be cooled.

High-temperature gas G10 used for the desorption is preferably gas obtained by heating part of clean gas G9 to have a high temperature by using heating means such as a regenerative heater 350. With the high temperature, an amount of the organic-solvent-containing gas to be treated is suppressed from being increased in adsorption portion 312.

### [Embodiment 2C]

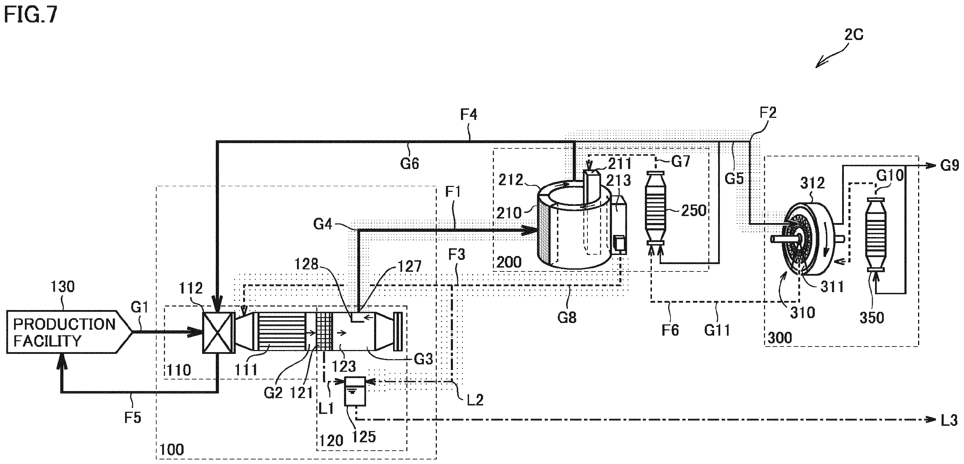

Fig. 7 is a diagram schematically showing a configuration of an organic solvent recovery system 2C in an embodiment 2C. Organic solvent recovery system 2C includes a cooling/condensing apparatus 100, a first concentrating apparatus 200, a second concentrating apparatus 300, and various types of flow-through paths. Organic solvent recovery system 2C is the same as organic solvent recovery system 1C of embodiment 1C except that desorption gas G11 of second concentrating apparatus 300 is returned to regenerative heater 250 through sixth flow-through path F6.

In organic solvent recovery system 2C, desorption gas G11 is returned to regenerative heater 250, so that it is not necessary to treat an amount of gas corresponding to desorption gas G11 in cooling/condensing apparatus 100 and first concentrating apparatus 200. Therefore, organic solvent recovery system 2C can contribute to downsizing and energy saving of cooling/condensing apparatus 100 and first concentrating apparatus 200. Since desorption gas G11 has a high temperature, organic solvent recovery system 2C can contribute to energy saving of regenerative heater 250.

### [Embodiment 3C]

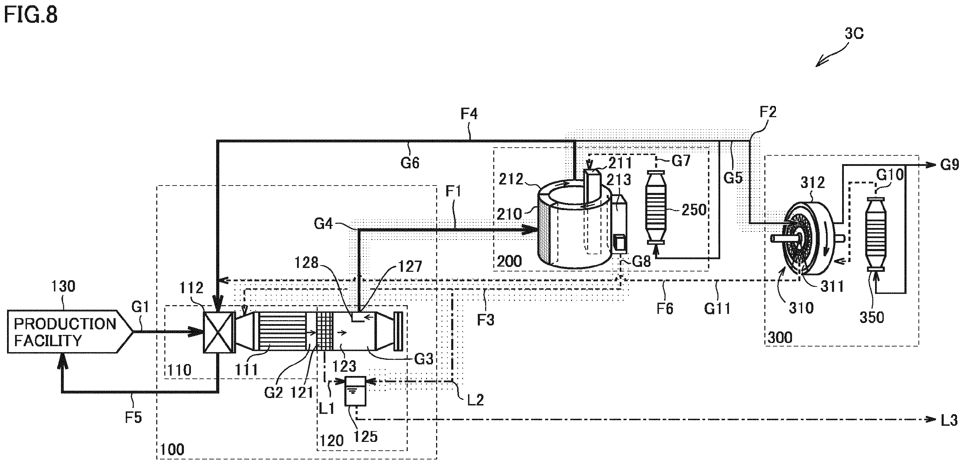

Fig. 8 is a diagram schematically showing a configuration of an organic solvent recovery system 3C in an embodiment 3C. Organic solvent recovery system 3C includes a cooling/condensing apparatus 100, a first concentrating apparatus 200, a second concentrating apparatus 300, and various types of flow-through paths. In organic solvent recovery system 3C, desorption gas G11 of second concentrating apparatus 300 is returned to fourth flow-through path F4 through sixth flow-through path F6. Organic solvent recovery system 3C is the same as organic solvent recovery system 1C of embodiment 1C except that desorption gas G11 of second concentrating apparatus 300 is returned to fourth flow-through path F4 through sixth flow-through path F6.

Desorption gas G11 having flowed through sixth flow-through path F6 flows through fourth flow-through path F4 together with cooling treatment gas G6 discharged from second concentrating apparatus 300 and is returned to second heat exchanger 112. In organic solvent recovery system 3C, it is not necessary to treat an amount of gas corresponding to desorption gas G11 in cooling/condensing apparatus 100 and first concentrating apparatus 200. Therefore, organic solvent recovery system 3C can contribute to downsizing and energy saving of cooling/condensing apparatus 100 and first concentrating apparatus 200. In organic solvent recovery system 3C, desorption gas G11 has a high temperature, so that the temperature of the fluid flowing through second heat exchanger 112 can be increased, thereby contributing to downsizing and energy saving of second heat exchanger 112 for cooling exhaust gas G1.

### [Embodiment 4C]

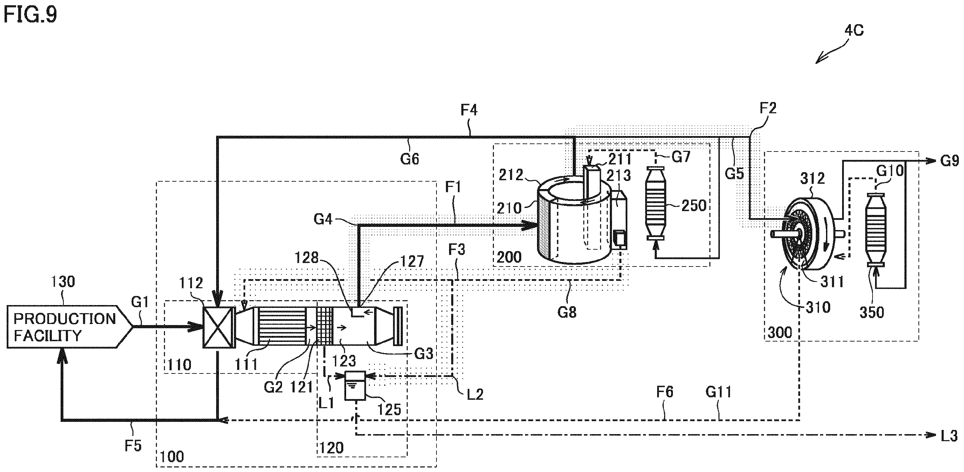

Fig. 9 is a diagram schematically showing a configuration of an organic solvent recovery system 4C in an embodiment 4C. Organic solvent recovery system 4C includes a cooling/condensing apparatus 100, a first concentrating apparatus 200, a second concentrating apparatus 300, and various types of flow-through paths. In organic solvent recovery system 4C, desorption gas G11 of second concentrating apparatus 300 is returned to fifth flow-through path F5 through sixth flow-through path F6. Organic solvent recovery system 4C is the same as organic solvent recovery system 1C of embodiment 1C except that desorption gas G11 of second concentrating apparatus 300 is returned to fifth flow-through path F5 through sixth flow-through path F6.

Desorption gas G11 having flowed through sixth flow-through path F6 flows through fifth flow-through path F5 together with exhaust gas G1 discharged from second heat exchanger 112 and part of cooling treatment gas G6, and is returned to production facility 130. In organic solvent recovery system 4C, it is not necessary to treat an amount of gas corresponding to desorption gas G11 in cooling/condensing apparatus 100 and first concentrating apparatus 200. Therefore, organic solvent recovery system 4C can contribute to downsizing and energy saving of cooling/condensing apparatus 100 and first concentrating apparatus 200. In organic solvent recovery system 4C, desorption gas G11 has a high temperature, so that the temperature of exhaust gas G1 discharged again from production facility 130 can be increased. Therefore, the temperature of the fluid flowing through second heat exchanger 112 can be increased in organic solvent recovery system 4C, thereby contributing to downsizing and energy saving of second heat exchanger 112 for cooling exhaust gas G1.

### [Functions and Effects]

Organic solvent recovery system 1C in the present embodiment includes: cooling/condensing apparatus 100 that cools exhaust gas G1 containing an organic solvent to liquefy and condense the organic solvent and discharges cooling treatment gas G4 in which the concentration of the organic solvent is reduced; first flow-through path F1 through which cooling treatment gas G4 flows; and first concentrating apparatus 200 that adsorbs, in adsorption unit 210, the organic solvent contained in cooling treatment gas G4 introduced from first flow-through path F1 and discharges cooling treatment gas G5 in which the concentration of the organic solvent is further reduced and that introduces high-temperature gas G7 to desorb the organic solvent from adsorption unit 210 and discharges desorption gas G8; second flow-through path F2 through which part of cooling treatment gas G5 flows; and second concentrating apparatus 300 that absorbs, in adsorption element 310, the organic solvent contained in cooling treatment gas G5 introduced from second flow-through path F2 and discharges clean gas G9 in which the concentration of the organic solvent is further reduced and that introduces high-temperature gas G10 to desorb the organic solvent from adsorption element 310 and discharges desorption gas G11.

Desorption gas G8 is returned to cooling/condensing apparatus 100, and desorption gas G11 is returned to first flow-through path F1. In organic solvent recovery system 1C, desorption gas G11 is returned to first flow-through path F1, so that it is not necessary to treat an amount of gas corresponding to desorption gas G11 in cooling/condensing apparatus 100. Therefore, organic solvent recovery system 1C can contribute to downsizing and energy saving of cooling/condensing apparatus 100. Since desorption gas G11 has a high temperature, NMP (N-methyl-2-pyrrolidone), moisture, or the like contained in cooling treatment gas G4 can be suppressed from being condensed in organic solvent recovery system 1C.

Desorption gas G8 is returned to cooling/condensing apparatus 100, and desorption gas G11 is returned to regenerative heater 250. In organic solvent recovery system 2C, desorption gas G11 is returned to regenerative heater 250, so that it is not necessary to treat an amount of gas corresponding to desorption gas G11 in cooling/condensing apparatus 100 and first concentrating apparatus 200. Therefore, organic solvent recovery system 2C can contribute to downsizing and energy saving of cooling/condensing apparatus 100 and first concentrating apparatus 200. Since desorption gas G11 has a high temperature, organic solvent recovery system 2C can contribute to energy saving of regenerative heater 250.

Desorption gas G8 is returned to cooling/condensing apparatus 100, and desorption gas G11 is returned to fourth flow-through path F4. Desorption gas G11 flows through fourth flow-through path F4 together with cooling treatment gas G6, and is returned to second heat exchanger 112. In organic solvent recovery system 3C, it is not necessary to treat an amount of gas corresponding to desorption gas G11 in cooling/condensing apparatus 100 and first concentrating apparatus 200. Therefore, organic solvent recovery system 3C can contribute to downsizing and energy saving of cooling/condensing apparatus 100 and first concentrating apparatus 200. In organic solvent recovery system 3C, desorption gas G11 has a high temperature, so that the temperature of the fluid flowing through second heat exchanger 112 can be increased, thereby contributing to downsizing and energy saving of second heat exchanger 112 for cooling exhaust gas G1.

Desorption gas G8 is returned to cooling/condensing apparatus 100, and desorption gas G11 is returned to fifth flow-through path F5. Desorption gas G11 flows through fifth flow-through path F5 together with exhaust gas G1 discharged from second heat exchanger 112 and part of cooling treatment gas G6, and is returned to production facility 130. In organic solvent recovery system 4C, it is not necessary to treat an amount of gas corresponding to desorption gas G11 in cooling/condensing apparatus 100 and first concentrating apparatus 200. Therefore, organic solvent recovery system 4C can contribute to downsizing and energy saving of cooling/condensing apparatus 100 and first concentrating apparatus 200. In organic solvent recovery system 4C, desorption gas G11 has a high temperature, so that the temperature of exhaust gas G1 discharged again from production facility 130 can be increased. Therefore, the temperature of the fluid flowing through second heat exchanger 112 can be increased in organic solvent recovery system 4C, thereby contributing to downsizing and energy saving of second heat exchanger 112 for cooling exhaust gas G1.

In first concentrating apparatus 200 in the present embodiment, the plurality of adsorption units 210 are disposed in the peripheral direction with respect to the cylinder axis of the rotor that is rotatable with respect to the cylinder axis, the rotor having a hollow cylindrical shape. Thus, the organic solvent can be recovered with high efficiency.

In second concentrating apparatus 300 in the present embodiment, adsorption element 310 is disposed on the adsorption rotor that is rotatable with respect to the cylinder axis of the adsorption rotor, the adsorption rotor having a shape of disk. Thus, the organic solvent can be recovered with high efficiency.

### [Other Embodiments]

In the above-described embodiments, the concentrating apparatus employs the two concentrating apparatuses, i.e., first concentrating apparatus 200 and second concentrating apparatus 300. The concentrating apparatus may employ two first concentrating apparatuses 200 or two second concentrating apparatuses 300 in accordance with an amount of gas. Further, three or more concentrating apparatuses may be employed in accordance with removal efficiency.

The organic solvent contained in exhaust gas G1 is an organic solvent that can be liquefied and recovered by cooling at 1°C to 50°C. Examples of the organic solvent include N-methyl-2-pyrrolidone, N-ethyl-2-pyrrolidone, N,N-dimethylformamide, N,N-dimethylacetamide, and n-decane. These are illustrative and not restrictive. One type or a plurality of types of organic solvents may be contained.

### [Embodiment 1D]

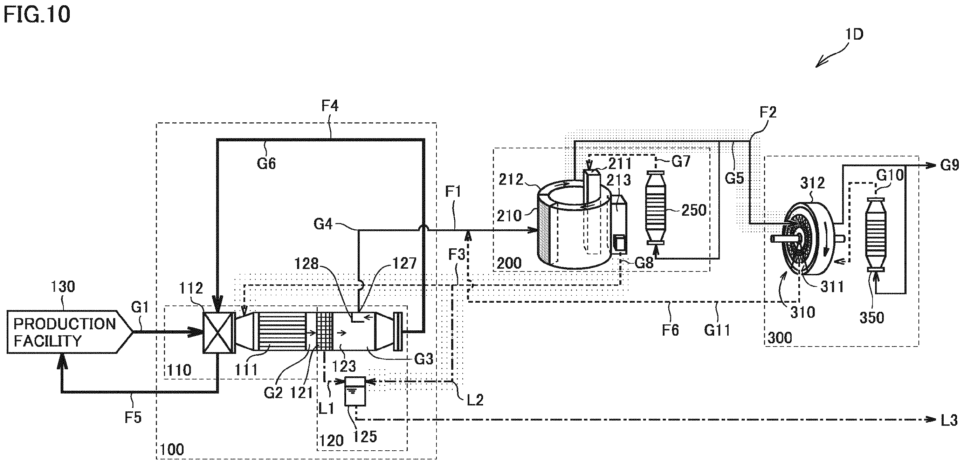

Fig. 10 is a diagram schematically showing a configuration of an organic solvent recovery system 1D in an embodiment 1D. Organic solvent recovery system 1D includes a cooling/condensing apparatus 100, a first concentrating apparatus 200, a second concentrating apparatus 300, and various types of flow-through paths.

Cooling/condensing apparatus 100 includes a cooling portion 110 and a separation portion 120. Exhaust gas G1 containing an organic solvent is discharged from a production facility 130. Exhaust gas G1 passes through cooling portion 110 and is accordingly cooled. With the passage of exhaust gas G1 through cooling portion 110, the organic solvent is liquefied and condensed.

Exhaust gas G2 having passed through cooling portion 110 passes through separation portion 120 and is accordingly separated into liquefied/condensed cooled condensate liquid L1 and cooling treatment gas G3 in which the concentration of the organic solvent is reduced. Part of cooling treatment gas G3 is discharged from cooling/condensing apparatus 100 to first concentrating apparatus 200 through chamber 123 as cooling treatment gas G4, and a remainder of cooling treatment gas G3 is returned from cooling/condensing apparatus 100 to a below-described second heat exchanger 112 as cooling treatment gas G6.

Cooling means and configuration of cooling portion 110 are not particularly limited. In embodiment 1D, a first heat exchanger 111 that performs cooling by indirect heat exchange between the exhaust gas and refrigerant such as cooling water, cold water, or brine is used. First heat exchanger 111 is positioned to allow exhaust gas G1 to flow in the horizontal direction.

In cooling portion 110, second heat exchanger 112 is provided to precede first heat exchanger 111 so as to cool exhaust gas G1 by heat exchange between cooling treatment gas G6 and exhaust gas G1. With second heat exchanger 112, heat transfer area and amount of refrigerant required for first heat exchanger 111 can be reduced. Exhaust gas G1 and part of cooling treatment gas G6 are returned to production facility 130 through fifth flow-through path F5. Conditions such as cooling temperatures in first heat exchanger 111 and second heat exchanger 112 may be appropriately determined in accordance with the organic solvent to be recovered.

Separation means and configuration of separation portion 120 are not particularly limited. In embodiment ID, a reticulated structure 121 is used to capture droplets when exposed to the droplets, such as a demister, a filter, or a mesh. Cooled condensate liquid L1 captured in reticulated structure 121 is collected by gravity into a tank 125 disposed below reticulated structure 121, and is recovered as recovered liquid L3.

Chamber 123 is a structure having a certain volume of space. Part of cooling treatment gas G3 stored in chamber 123 for a certain period of time flows through a first flow-through path F1 as cooling treatment gas G4, and is supplied to first concentrating apparatus 200. The remainder of cooling treatment gas G3 flows through a fourth flow-through path F4 as cooling treatment gas G6, and is returned to second heat exchanger 112. Chamber 123 has a partition portion 128 that enables suction of the cooling treatment gas into first flow-through path F1 in a direction opposite to the discharging direction of cooling treatment gas G3 discharged from reticulated structure 121.

First flow-through path F1 is a region through which cooling treatment gas G4 is introduced from chamber 123 to first concentrating apparatus 200. A connection opening of first flow-through path F1 to chamber 123 is preferably a ceiling portion 127 of chamber 123. Accordingly, a small amount of droplets that could not be captured by separation portion 120 are suppressed from entering first concentrating apparatus 200 so as to prevent performance and strength from being decreased due to wetting of a below-described adsorption unit 210 of first concentrating apparatus 200. More preferably, cooling treatment gas G4 is drawn in a direction opposite to the gas-flow direction of cooling treatment gas G3. Thus, the entrance of droplets can be further prevented. In addition, a droplet entrance prevention member similar to reticulated structure 121 described above may be provided at a drawing opening for cooling treatment gas G4, or a heater may be provided to vaporize droplets.

First concentrating apparatus 200 has an adsorption rotor 212 including an adsorption material that adsorbs the organic solvent contained in the gas when exposed to the gas and that desorbs the adsorbed organic solvent when exposed to heated gas. Adsorption rotor 212 includes a plurality of adsorption units 210 partitioned by a plurality of partition portions. With the plurality of adsorption units 210, adsorption rotor 212 has a hollow cylindrical shape as a whole. Adsorption rotor 212 is installed in a treatment chamber and is provided to allow fluid to flow in a radial direction. Adsorption rotor 212 is provided to be rotatable with respect to a cylinder axis thereof by receiving rotational driving force of a motor.

In first concentrating apparatus 200, part of adsorption units 210 constitute an adsorption portion that adsorbs the organic solvent contained in cooling treatment gas G4 supplied from the outside of adsorption units 210 toward the inside of adsorption units 210, and the remainder of adsorption units 210 constitute a desorption portion that desorbs the organic solvent adsorbed in adsorption units 210 from adsorption units 210 by supplying heated air from the inside of adsorption units 210 toward the outside of adsorption units 210.

For cleaning, cooling treatment gas G4 supplied into the treatment chamber is introduced into the adsorption portion from the outer peripheral surface of adsorption rotor 212. When cooling treatment gas G4 introduced into the adsorption portion passes through adsorption rotor 212 from the outer peripheral surface toward the inner peripheral surface along the radial direction, cooling treatment gas G4 is cleaned by adsorbing the organic solvent in the plurality of adsorption units 210 located in the adsorption portion.

Cooled treatment gas G5 serving as the cleaned and treated fluid is discharged as clean gas from the upper portions of adsorption units 210. The discharged clean gas flows through second flow-through path F2 as cooling treatment gas G5 and is supplied to second concentrating apparatus 300.

An inner peripheral side flow path forming member 211 and an outer peripheral side flow path forming member 213 are arranged to face each other on the inner peripheral side and outer peripheral side of adsorption rotor 212 so as to sandwich a portion of adsorption rotor 212 in the peripheral direction. A region of adsorption rotor 212 sandwiched between inner peripheral side flow path forming member 211 and outer peripheral side flow path forming member 213 is the desorption portion.

In order to desorb the organic solvent, high-temperature gas G7, which is obtained by heating part of cooling treatment gas G5 using regenerative heater 250, is introduced from inner peripheral side flow path forming member 211 to the desorption portion. When high-temperature gas G7 introduced into the desorption portion passes through adsorption rotor 212, the organic solvent adsorbed in the plurality of adsorption units 210 located in the desorption portion is desorbed by heat from the plurality of adsorption units 210. Desorption gas G8 containing the organic solvent is discharged as concentrated gas from the desorption portion to the outside of the treatment chamber through outer peripheral side flow path forming member 213 and is returned to third flow-through path F3. Part of the organic solvent contained in desorption gas G8 is liquefied and condensed and is collected in tank 125 as desorbed condensate liquid L2.

Third flow-through path F3 is a region through which desorption gas G8 is returned to the exhaust gas G1 introduction portion of cooling/condensing apparatus 100. Third flow-through path F3 is preferably connected thereto such that the desorption portion is disposed above a position of confluence of desorption gas G8 and exhaust gas G1 supplied to cooling/condensing apparatus 100. With this configuration, desorbed condensate liquid L2 generated from desorption gas G8 of first concentrating apparatus 200 is facilitated to be moved to cooling/condensing apparatus 100. Third flow-through path F3 is preferably configured to communicate with two positions of cooling/condensing apparatus 100, i.e., the exhaust gas G1 introduction portion and tank 125. With this configuration, desorbed condensate liquid L2 generated from desorption gas G8 is facilitated to be recovered directly into tank 125.

In first concentrating apparatus 200, the adsorption treatment for the target substance is performed on adsorption units 210 located in the adsorption portion, and the desorption treatment for the target substance is performed on adsorption units 210 located in the desorption portion after the adsorption treatment. Since adsorption rotor 212 is rotated with respect to the cylinder axis, each adsorption unit 210 is moved alternately between the desorption portion and the adsorption portion, thereby continuously performing the adsorption treatment and desorption treatment for the target substance.

As a material of the adsorption element included in adsorption unit 210, activated alumina, silica gel, activated carbon material, zeolite, or the like can be used. The shape of the adsorption element in adsorption unit 210 is not particularly limited, and may be, for example, as follows: a sheet containing the activated carbon material or zeolite is formed in the form of a honeycomb, or an activated carbon fiber nonwoven fabrics are layered.

Second concentrating apparatus 300 has an adsorption element 310 including an adsorption material that adsorbs the organic solvent contained in the gas when exposed to the gas and that desorbs the adsorbed organic solvent when exposed to heated gas. Adsorption element 310 includes a desorption portion (desorption zone) 311 and an adsorption portion (adsorption zone) 312. In adsorption portion 312, when cooling treatment gas G5 is introduced, the adsorption material is exposed to cooling treatment gas G5, with the result that the organic solvent contained in cooling treatment gas G5 is adsorbed in the adsorption material. Accordingly, cooling treatment gas G5 is cleaned and clean gas G9 is discharged.

In desorption portion 311, when high-temperature gas G10 having a temperature higher than that of cooling treatment gas G5 is introduced into the adsorption material, the organic solvent is desorbed from the adsorption material, with the result that desorption gas G11 containing the organic solvent is discharged. Desorption gas G11 is returned to first flow-through path F1 through sixth flow-through path F6.

In organic solvent recovery system 1D, desorption gas G11 is returned to first flow-through path F1, so that it is not necessary to treat an amount of gas corresponding to desorption gas G11 in cooling/condensing apparatus 100. Therefore, organic solvent recovery system 1D can contribute to downsizing and energy saving of cooling/condensing apparatus 100. Since desorption gas G11 has a high temperature, NMP (N-methyl-2-pyrrolidone), moisture, or the like contained in cooling treatment gas G4 can be suppressed from being condensed in organic solvent recovery system 1D.

As the adsorption material contained in adsorption element 310, activated alumina, silica gel, activated carbon material and zeolite have been widely used. Among them, activated carbon and hydrophobic zeolite are particularly suitably used.

As shown in Fig. 10, second concentrating apparatus 300 includes a rotation shaft and an adsorption element 310 provided around the rotation shaft. Second concentrating apparatus 300 is configured to rotate adsorption element 310 with respect to the rotation axis so as to continuously move, to desorption portion 311, the adsorption material having adsorbed the organic solvent contained in cooling treatment gas G5 introduced from second flow-through path F2 in adsorption portion 312.

Second concentrating apparatus 300 may have a cleaning portion (purging portion) to which a portion of the adsorption material having completed the desorption treatment in desorption portion 311 is moved before being moved to adsorption portion 312. Part of clean gas G9 may be introduced into the purging portion, and the purging portion outlet gas discharged from the purging portion may be introduced into adsorption portion 312. This is due to the following reason: by cleaning the adsorption material having completed the desorption with clean gas G9, desorption gas G11 remaining in the adsorption material can be prevented from being mixed into clean gas G9 and the adsorption material can be cooled.

High-temperature gas G10 used for the desorption is preferably gas obtained by heating part of clean gas G9 to have a high temperature by using heating means such as a regenerative heater 350. With the high temperature, an amount of the organic-solvent-containing gas to be treated is suppressed from being increased in adsorption portion 312.

### [Embodiment 2D]

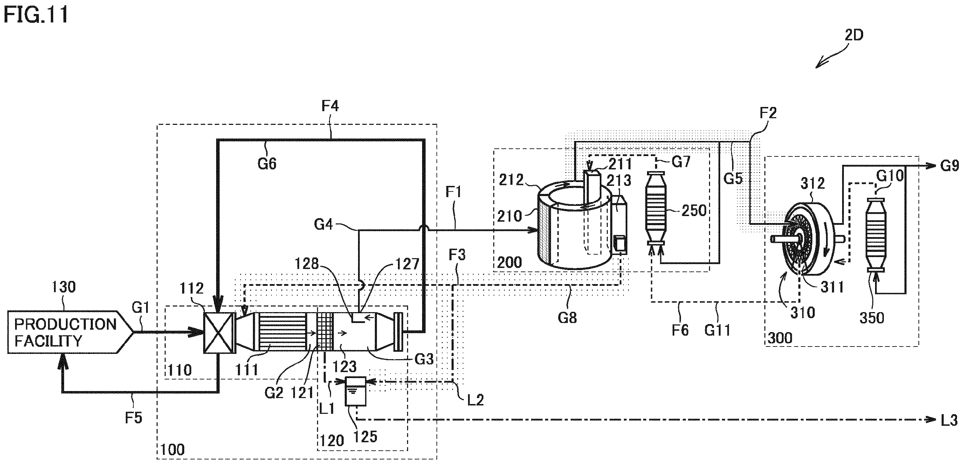

Fig. 11 is a diagram schematically showing a configuration of an organic solvent recovery system 2D in an embodiment 2D. Organic solvent recovery system 2D includes a cooling/condensing apparatus 100, a first concentrating apparatus 200, a second concentrating apparatus 300, and various types of flow-through paths. Organic solvent recovery system 2D is the same as organic solvent recovery system 1D of embodiment 1D except that desorption gas G11 of second concentrating apparatus 300 is returned to regenerative heater 250 through sixth flow-through path F6.

In organic solvent recovery system 2D, desorption gas G11 is returned to regenerative heater 250, so that it is not necessary to treat an amount of gas corresponding to desorption gas G11 in cooling/condensing apparatus 100 and first concentrating apparatus 200. Therefore, organic solvent recovery system 2D can contribute to downsizing and energy saving of cooling/condensing apparatus 100 and first concentrating apparatus 200. Since desorption gas G11 has a high temperature, organic solvent recovery system 2D can contribute to energy saving of regenerative heater 250.

### [Embodiment 3D]

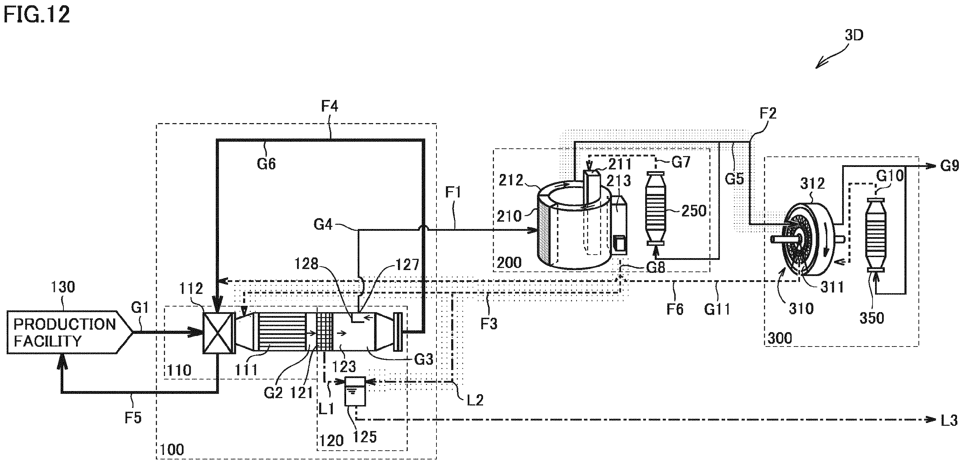

Fig. 12 is a diagram schematically showing a configuration of an organic solvent recovery system 3D in an embodiment 3D. Organic solvent recovery system 3D includes a cooling/condensing apparatus 100, a first concentrating apparatus 200, a second concentrating apparatus 300, and various types of flow-through paths. In organic solvent recovery system 3D, desorption gas G11 of second concentrating apparatus 300 is returned to fourth flow-through path F4 through sixth flow-through path F6. Organic solvent recovery system 3D is the same as organic solvent recovery system 1D of embodiment 1D except that desorption gas G11 of second concentrating apparatus 300 is returned to fourth flow-through path F4 through sixth flow-through path F6.

Desorption gas G11 having flowed through sixth flow-through path F6 flows through fourth flow-through path F4 together with cooling treatment gas G6 discharged from cooling/condensing apparatus 100 and is returned to second heat exchanger 112. In organic solvent recovery system 3D, it is not necessary to treat an amount of gas corresponding to desorption gas G11 in cooling/condensing apparatus 100 and first concentrating apparatus 200. Therefore, organic solvent recovery system 3D can contribute to downsizing and energy saving of cooling/condensing apparatus 100 and first concentrating apparatus 200. In organic solvent recovery system 3D, desorption gas G11 has a high temperature, so that the temperature of the fluid flowing through second heat exchanger 112 can be increased, thereby contributing to downsizing and energy saving of second heat exchanger 112 for cooling exhaust gas G1.

### [Embodiment 4D]

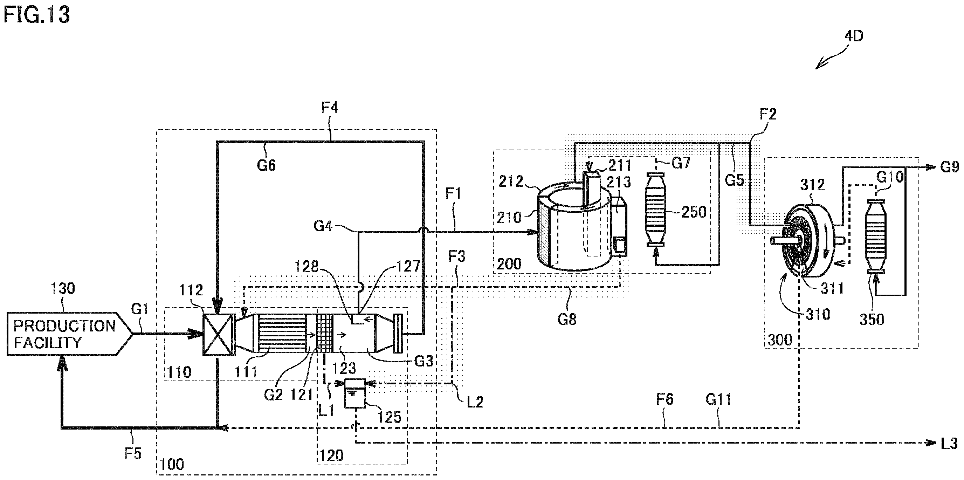

Fig. 13 is a diagram schematically showing a configuration of an organic solvent recovery system 4D in an embodiment 4D. Organic solvent recovery system 4D includes a cooling/condensing apparatus 100, a first concentrating apparatus 200, a second concentrating apparatus 300, and various types of flow-through paths. In organic solvent recovery system 4D, desorption gas G11 of second concentrating apparatus 300 is returned to fifth flow-through path F5 through sixth flow-through path F6. Organic solvent recovery system 4D is the same as organic solvent recovery system 1D of embodiment 1D except that desorption gas G11 of second concentrating apparatus 300 is returned to fifth flow-through path F5 through sixth flow-through path F6

Desorption gas G11 having flowed through sixth flow-through path F6 flows through fifth flow-through path F5 together with exhaust gas G1 discharged from second heat exchanger 112 and part of cooling treatment gas G6, and is returned to production facility 130. In organic solvent recovery system 4D, it is not necessary to treat an amount of gas corresponding to desorption gas G11 in cooling/condensing apparatus 100 and first concentrating apparatus 200. Therefore, organic solvent recovery system 4D can contribute to downsizing and energy saving of cooling/condensing apparatus 100 and first concentrating apparatus 200. In organic solvent recovery system 4D, desorption gas G11 has a high temperature, so that the temperature of exhaust gas G1 discharged again from production facility 130 can be increased. Therefore, the temperature of the fluid flowing through second heat exchanger 112 can be increased in organic solvent recovery system 4D, thereby contributing to downsizing and energy saving of second heat exchanger 112 for cooling exhaust gas G1.

### [Functions and Effects]

Organic solvent recovery system 1D in the present embodiment includes: cooling/condensing apparatus 100 that cools exhaust gas G1 containing the organic solvent to liquefy and condense the organic solvent and discharges cooling treatment gas G4 in which the concentration of the organic solvent is reduced; first flow-through path F1 through which part of cooling treatment gas G4 flows; and first concentrating apparatus 200 that adsorbs in adsorption units 210, the organic solvent contained in cooling treatment gas G4 introduced from first flow-through path F1 and discharges cooling treatment gas G5 in which the concentration of the organic solvent is further reduced and that introduces high-temperature gas G7 to desorb the organic solvent from adsorption units 210 and discharges desorption gas G8; second flow-through path F2 through which cooling treatment gas G5 flows; and second concentrating apparatus 300 that absorbs, in adsorption element 310, the organic solvent contained in cooling treatment gas G5 introduced from second flow-through path F2 and discharges clean gas G9 in which the concentration of the organic solvent is further reduced and that introduces high-temperature gas G10 to desorb the organic solvent from adsorption element 310 and discharges desorption gas G11.

Cooling/condensing apparatus 100 includes second heat exchanger 112 that cools exhaust gas G1 by exchanging heat with the refrigerant. Organic solvent recovery system 1D further includes fourth flow-through path F4 through which cooling treatment gas G6 is returned to second heat exchanger 112 as the remainder of the cooling treatment gas other than the part of cooling treatment gas G4. Desorption gas G8 is returned to cooling/condensing apparatus 100, and desorption gas G11 is returned to first flow-through path F1. In organic solvent recovery system 1D, desorption gas G11 is returned to first flow-through path F1, so that it is not necessary to treat an amount of gas corresponding to desorption gas G11 in cooling/condensing apparatus 100. Therefore, organic solvent recovery system 1D can contribute to downsizing and energy saving of cooling/condensing apparatus 100. Since desorption gas G11 has a high temperature, NMP (N-methyl-2-pyrrolidone), moisture, or the like contained in cooling treatment gas G4 can be suppressed from being condensed in organic solvent recovery system 1D.

Desorption gas G8 is returned to cooling/condensing apparatus 100, and desorption gas G11 is returned to regenerative heater 250. In organic solvent recovery system 2D, desorption gas G11 is returned to regenerative heater 250, so that it is not necessary to treat an amount of gas corresponding to desorption gas G11 in cooling/condensing apparatus 100 and first concentrating apparatus 200. Therefore, organic solvent recovery system 2D can contribute to downsizing and energy saving of cooling/condensing apparatus 100 and first concentrating apparatus 200. Since desorption gas G11 has a high temperature, organic solvent recovery system 2D can contribute to energy saving of regenerative heater 250.

Desorption gas G8 is returned to cooling/condensing apparatus 100, and desorption gas G11 is returned to fourth flow-through path F4 Desorption gas G11 flows through fourth flow-through path F4 together with cooling treatment gas G6, and is returned to second heat exchanger 112. In organic solvent recovery system 3D, it is not necessary to treat an amount of gas corresponding to desorption gas G11 in cooling/condensing apparatus 100 and first concentrating apparatus 200. Therefore, organic solvent recovery system 3D can contribute to downsizing and energy saving of cooling/condensing apparatus 100 and first concentrating apparatus 200. In organic solvent recovery system 3D, desorption gas G11 has a high temperature, so that the temperature of the fluid flowing through second heat exchanger 112 can be increased, thereby contributing to downsizing and energy saving of second heat exchanger 112 for cooling exhaust gas G1.

Desorption gas G8 is returned to cooling/condensing apparatus 100, and desorption gas G11 is returned to fifth flow-through path F5. Desorption gas G11 flows through fifth flow-through path F5 together with exhaust gas G1 discharged from second heat exchanger 112 and part of cooling treatment gas G6, and is returned to production facility 130. In organic solvent recovery system 4D, it is not necessary to treat an amount of gas corresponding to desorption gas G11 in cooling/condensing apparatus 100 and first concentrating apparatus 200. Therefore, organic solvent recovery system 4D can contribute to downsizing and energy saving of cooling/condensing apparatus 100 and first concentrating apparatus 200. In organic solvent recovery system 4D, desorption gas G11 has a high temperature, so that the temperature of exhaust gas G1 discharged again from production facility 130 can be increased. Therefore, the temperature of the fluid flowing through second heat exchanger 112 can be increased in organic solvent recovery system 4D, thereby contributing to downsizing and energy saving of second heat exchanger 112 for cooling exhaust gas G1.

In first concentrating apparatus 200 in the present embodiment, the plurality of adsorption units 210 are disposed in the peripheral direction with respect to the cylinder axis of the rotor that is rotatable with respect to the cylinder axis, the rotor having a hollow cylindrical shape. Thus, the organic solvent can be recovered with high efficiency.

In second concentrating apparatus 300 in the present embodiment, adsorption element 310 is disposed on the adsorption rotor that is rotatable with respect to a cylinder axis of the adsorption rotor, the adsorption rotor having a shape of disk. Thus, the organic solvent can be recovered with high efficiency.

### [Other Embodiments]

In the above-described embodiments, the concentrating apparatus employs the two concentrating apparatuses, i.e., first concentrating apparatus 200 and second concentrating apparatus 300. The concentrating apparatus may employ two first concentrating apparatuses 200 or two second concentrating apparatuses 300 in accordance with an amount of gas. Further, three or more concentrating apparatuses may be employed in accordance with removal efficiency.

The organic solvent contained in exhaust gas G1 is an organic solvent that can be liquefied and recovered by cooling at 1°C to 50°C. Examples of the organic solvent include N-methyl-2-pyrrolidone, N-ethyl-2-pyrrolidone, N,N-dimethylformamide, N,N-dimethylacetamide, and n-decane. These are illustrative and not restrictive. One type or a plurality of types of organic solvents may be contained.

The embodiments disclosed herein are illustrative and non-restrictive in any respect. The scope of the present disclosure is defined by the terms of the claims, rather than the embodiments described above, and is intended to include any modifications within the scope and meaning equivalent to the terms of the claims.

### REFERENCE SIGNS LIST

1A, 1B, 1C, 1D, 2B, 2C, 2D, 3C, 3D, 4C, 4D: organic solvent recovery system; 100: cooling/condensing apparatus; 110: cooling portion; 111: first heat exchanger; 112: second heat exchanger; 120: separation portion; 121: reticulated structure; 123: chamber, 125: tank; 127: ceiling portion; 128: partition portion; 130: production facility; 200: first concentrating apparatus; 210: adsorption portion; 211: inner peripheral side flow path forming member; 212: adsorption rotor; 213: outer peripheral side flow path forming member; 250, 350: regenerative heater; 300: second concentrating apparatus; 310: adsorption element; 311: desorption portion; 312: adsorption portion; F1: first flow-through path; F2: second flow-through path; F3: third flow-through path; F4: fourth flow-through path; F5: fifth flow-through path; F6: sixth flow-through path; G1, G2: exhaust gas; G3, G4, G5, G6: cooling treatment gas; G7, G10: high-temperature gas; G8, G11: desorption gas; G9: clean gas, L1: cooled condensate liquid; L2: desorbed condensate liquid; L3: recovered liquid.

## Claims

1. An organic solvent recovery system comprising:
a cooling/condensing apparatus that cools exhaust gas containing an organic solvent to liquefy and condense the organic solvent and discharges cooling treatment gas in which a concentration of the organic solvent is reduced;
a first flow-through path through which part of the cooling treatment gas flows;
a concentrating apparatus that has an adsorption element, that adsorbs, in the adsorption element, the organic solvent contained in the cooling treatment gas introduced from the first flow-through path and discharges clean gas in which the concentration of the organic solvent is further reduced, and that introduces high-temperature gas to desorb the organic solvent from the adsorption element and discharges desorption gas; and
a second flow-through path that introduces the desorption gas into the cooling/condensing apparatus, wherein
the cooling/condensing apparatus includes
a reticulated structure that separates the cooled exhaust gas into the condensed organic solvent and the cooling treatment gas when exposed to the cooled exhaust gas, and
a chamber that stores, for a certain period of time, the cooling treatment gas after passing through the reticulated structure, and
the first flow-through path is disposed to introduce the part of the cooling treatment gas from a ceiling portion of the chamber to the concentrating apparatus.

2. The organic solvent recovery system according to claim 1, wherein the chamber has a partition portion that enables suction of the cooling treatment gas into the first flow-through path in a direction opposite to a discharging direction of the cooling treatment gas discharged from the reticulated structure.

3. The organic solvent recovery system according to claim 1, wherein the cooling/condensing apparatus includes a heat exchanger that performs the cooling by exchanging heat with refrigerant.

4. The organic solvent recovery system according to claim 1, wherein the second flow-through path is disposed such that a desorption portion is disposed above a position of confluence of the desorption gas and the exhaust gas.

5. The organic solvent recovery system according to claim 1, wherein the exhaust gas is gas discharged from a production facility,
the organic solvent recovery system comprising a return path through which a remainder of the cooling treatment gas other than the part of the cooling treatment gas discharged from the first flow-through path is returned to the production facility.

6. The organic solvent recovery system according to any one of claims 3 to 5, wherein
the heat exchanger includes a first heat exchanger and a second heat exchanger provided at a stage preceding the first heat exchanger, and
the second heat exchanger cools the exhaust gas introduced into the cooling/condensing apparatus, by exchanging heat with the remainder of the cooling treatment gas.

7. An organic solvent recovery system for recovering an organic solvent from exhaust gas containing the organic solvent and discharged from a production facility, the organic solvent recovery system comprising:
a cooling/condensing apparatus that cools the exhaust gas containing the organic solvent to liquefy and condense the organic solvent and discharges cooling treatment gas in which a concentration of the organic solvent is reduced;
a first flow-through path through which the cooling treatment gas flows;
a first concentrating apparatus that adsorbs, in a first adsorption element, the organic solvent contained in the cooling treatment gas introduced from the first flow-through path and discharges first treatment gas in which the concentration of the organic solvent is further reduced, and that introduces high-temperature gas to desorb the organic solvent from the first adsorption element and discharges first desorption gas;
a second flow-through path through which part of the first treatment gas flows;
a second concentrating apparatus that adsorbs, in a second adsorption element, the organic solvent contained in the first treatment gas introduced from the second flow-through path and discharges second treatment gas in which the concentration of the organic solvent is further reduced, and that introduces high-temperature gas to desorb the organic solvent from the second adsorption element and discharges second desorption gas; and
a third flow-through path through which the first desorption gas and the second desorption gas are returned to the cooling/condensing apparatus.

8. The organic solvent recovery system according to claim 7, wherein
the cooling/condensing apparatus further includes
a reticulated structure that separates the cooled exhaust gas into the condensed organic solvent and the cooling treatment gas when exposed to the cooled exhaust gas, and
a chamber that stores, for a certain period of time, the cooling treatment gas after passing through the reticulated structure, and
the first flow-through path is disposed to introduce the cooling treatment gas from a ceiling portion of the chamber to the first concentrating apparatus.

9. The organic solvent recovery system according to claim 8, wherein the chamber has a partition portion that enables suction of the cooling treatment gas into the first flow-through path in a direction opposite to a discharging direction of the cooling treatment gas discharged from the reticulated structure.

10. The organic solvent recovery system according to claim 7, wherein the cooling/condensing apparatus further includes a heat exchanger that performs the cooling by exchanging heat with refrigerant.

11. The organic solvent recovery system according to claim 7, further comprising a return path through which a remainder of the first treatment gas other than the part of the first treatment gas discharged from the second flow-through path is returned to the production facility.

12. The organic solvent recovery system according to claim 10 or 11, wherein
the heat exchanger includes a first heat exchanger and a second heat exchanger provided at a stage preceding the first heat exchanger, and
the second heat exchanger cools the exhaust gas introduced into the cooling/condensing apparatus, by exchanging heat with the remainder of the first treatment gas.

13. An organic solvent recovery system for recovering an organic solvent from exhaust gas containing the organic solvent and discharged from a production facility, the organic solvent recovery system comprising:
a cooling/condensing apparatus that cools the exhaust gas containing the organic solvent to liquefy and condense the organic solvent and discharges cooling treatment gas in which a concentration of the organic solvent of the exhaust gas is reduced;
a cooling gas flow-through path through which the cooling treatment gas flows;
a concentrating apparatus that adsorbs, in an adsorption element, the organic solvent contained in the cooling treatment gas introduced from the cooling gas flow-through path and discharges treatment gas in which the concentration of the organic solvent is further reduced, and that introduces high-temperature gas to desorb the organic solvent from the adsorption element and discharges desorption gas; and
a desorption gas flow-through path through which the desorption gas is introduced into the cooling/condensing apparatus, wherein
the cooling/condensing apparatus includes
a cooling portion through which the exhaust gas flows, and
a separation portion located on a downstream side with respect to the cooling portion when viewed along a direction in which the exhaust gas flows,
the separation portion has
a receiving portion that receives a cooled condensate liquid containing the organic solvent and cooled by the cooling portion,
a reticulated structure that separates the cooled exhaust gas into the cooled condensate liquid and the cooling treatment gas when exposed to the cooled exhaust gas, and
a chamber that stores, for a certain period of time, the cooling treatment gas after passing through the reticulated structure, and
when viewed along a direction in which the exhaust gas flows, a direction of flow from the reticulated structure to the chamber in the separation portion intersects a direction of flow from the cooling portion to the separation portion so as to allow the exhaust gas to flow in a direction of L shape.

14. The organic solvent recovery system according to claim 13, wherein a heater is disposed on a downstream side with respect to the reticulated structure so as to heat the cooling treatment gas.

15. The organic solvent recovery system according to claim 13, wherein
a weir is provided in the chamber to prevent the cooled condensate liquid from flowing into the cooling gas flow-through path.

16. The organic solvent recovery system according to claim 13, wherein
the concentrating apparatus includes a first concentrating apparatus and a second concentrating apparatus located on a downstream side with respect to the first concentrating apparatus, and
the first concentrating apparatus adsorbs, in a first adsorption element, the organic solvent contained in the cooling treatment gas introduced from the cooling gas flow-through path and discharges first treatment gas in which the concentration of the organic solvent is further reduced, and introduces high-temperature gas to desorb the organic solvent from the first adsorption element and discharges first desorption gas,
the organic solvent recovery system further comprising a first treatment gas flow-through path through which part of the first treatment gas flows, wherein
the second concentrating apparatus adsorbs, in a second adsorption element, the organic solvent contained in the first treatment gas introduced from the first treatment gas flow-through path and discharges second treatment gas in which the concentration of the organic solvent is further reduced, and that introduces high-temperature gas to desorb the organic solvent from the second adsorption element and discharges second desorption gas.

17. The organic solvent recovery system according to claim 16, wherein in the first concentrating apparatus, a plurality of the first adsorption elements are disposed in a peripheral direction with respect to a cylinder axis of a rotor that is rotatable with respect to the cylinder axis, the rotor having a hollow cylindrical shape.

18. The organic solvent recovery system according to claim 16, wherein in the second concentrating apparatus, the second adsorption element is disposed on an adsorption rotor that is rotatable with respect to a cylinder axis of the adsorption rotor, the adsorption rotor having a shape of disk.

19. An organic solvent recovery system for recovering an organic solvent from exhaust gas containing the organic solvent and discharged from a production facility, the organic solvent recovery system comprising:
a cooling/condensing apparatus that cools the exhaust gas containing the organic solvent to liquefy and condense the organic solvent and discharges cooling treatment gas in which a concentration of the organic solvent is reduced;
a cooling gas flow-through path through which the cooling treatment gas flows;
a first concentrating apparatus that adsorbs, in a first adsorption element, the organic solvent contained in the cooling treatment gas introduced from the cooling gas flow-through path and discharges first treatment gas in which the concentration of the organic solvent is further reduced, and that introduces high-temperature gas to desorb the organic solvent from the first adsorption element and discharges first desorption gas;
a first treatment gas flow-through path through which part of the first treatment gas flows; and
a second concentrating apparatus that adsorbs, in a second adsorption element, the organic solvent contained in the first treatment gas introduced from the first treatment gas flow-through path and discharges second treatment gas in which the concentration of the organic solvent is further reduced, and that introduces high-temperature gas to desorb the organic solvent from the second adsorption element and discharges second desorption gas, wherein
the first desorption gas is returned to the cooling/condensing apparatus and the second desorption gas is returned to the cooling gas flow-through path.

20. An organic solvent recovery system for recovering an organic solvent from exhaust gas containing the organic solvent and discharged from a production facility, the organic solvent recovery system comprising:
a cooling/condensing apparatus that cools the exhaust gas containing the organic solvent to liquefy and condense the organic solvent and discharges cooling treatment gas in which a concentration of the organic solvent is reduced;
a cooling gas flow-through path through which the cooling treatment gas flows;
a first concentrating apparatus that adsorbs, in a first adsorption element, the organic solvent contained in the cooling treatment gas introduced from the cooling gas flow-through path and discharges first treatment gas in which the concentration of the organic solvent is further reduced, and that introduces high-temperature gas using a first heater to desorb the organic solvent from the first adsorption element and discharges first desorption gas;
a first treatment gas flow-through path through which part of the first treatment gas flows; and
a second concentrating apparatus that adsorbs, in a second adsorption element, the organic solvent contained in the first treatment gas introduced from the first treatment gas flow-through path and discharges second treatment gas in which the concentration of the organic solvent is further reduced, and that introduces high-temperature gas using a second heater to desorb the organic solvent from the second adsorption element and discharges second desorption gas, wherein
the first desorption gas is returned to the cooling/condensing apparatus and the second desorption gas is returned to the first heater.

21. An organic solvent recovery system for recovering an organic solvent from exhaust gas containing the organic solvent and discharged from a production facility, the organic solvent recovery system comprising:
a cooling/condensing apparatus that cools the exhaust gas containing the organic solvent to liquefy and condense the organic solvent and discharges cooling treatment gas in which a concentration of the organic solvent is reduced;
a cooling gas flow-through path through which the cooling treatment gas flows;
a first concentrating apparatus that adsorbs, in a first adsorption element, the organic solvent contained in the cooling treatment gas introduced from the cooling gas flow-through path and discharges first treatment gas in which the concentration of the organic solvent is further reduced, and that introduces high-temperature gas to desorb the organic solvent from the first adsorption element and discharges first desorption gas;
a first treatment gas flow-through path through which part of the first treatment gas flows;
a cooling/condensing apparatus return path through which a remainder of the first treatment gas other than part of the first treatment gas discharged from the first treatment gas flow-through path is returned to the cooling/condensing apparatus; and
a second concentrating apparatus that adsorbs, in a second adsorption element, the organic solvent contained in the first treatment gas introduced from the first treatment gas flow-through path and discharges second treatment gas in which the concentration of the organic solvent is further reduced, and that introduces high-temperature gas to desorb the organic solvent from the second adsorption element and discharges second desorption gas, wherein
the first desorption gas is returned to the cooling/condensing apparatus and the second desorption gas is returned to the cooling/condensing apparatus return path.

22. An organic solvent recovery system for recovering an organic solvent from exhaust gas containing the organic solvent and discharged from a production facility, the organic solvent recovery system comprising:
a cooling/condensing apparatus that cools the exhaust gas containing the organic solvent to liquefy and condense the organic solvent and discharges cooling treatment gas in which a concentration of the organic solvent is reduced;
a cooling gas flow-through path through which the cooling treatment gas flows;
a first concentrating apparatus that adsorbs, in a first adsorption element, the organic solvent contained in the cooling treatment gas introduced from the cooling gas flow-through path and discharges first treatment gas in which the concentration of the organic solvent is further reduced, and that introduces high-temperature gas to desorb the organic solvent from the first adsorption element and discharges first desorption gas;
a first treatment gas flow-through path through which part of the first treatment gas flows; and
a second concentrating apparatus that adsorbs, in a second adsorption element, the organic solvent contained in the first treatment gas introduced from the first treatment gas flow-through path and discharges second treatment gas in which the concentration of the organic solvent is further reduced, and that introduces high-temperature gas to desorb the organic solvent from the second adsorption element and discharges second desorption gas, wherein
the cooling/condensing apparatus includes a heat exchanger that performs the cooling by exchanging heat with refrigerant,
the organic solvent recovery system further comprising a production facility return path through which part of the exhaust gas discharged from the production facility is returned to the production facility after passing through the heat exchanger, and
the first desorption gas is returned to the cooling/condensing apparatus and the second desorption gas is returned to the production facility return path.

23. The organic solvent recovery system according to any one of claims 19 to 22, wherein in the first concentrating apparatus, a plurality of the first adsorption elements are disposed in a peripheral direction with respect to a cylinder axis of a rotor that is rotatable with respect to the cylinder axis, the rotor having a hollow cylindrical shape.

24. The organic solvent recovery system according to any one of claims 19 to 22, wherein in the second concentrating apparatus, the second adsorption element is disposed on an adsorption rotor that is rotatable with respect to a cylinder axis of the adsorption rotor, the adsorption rotor having a shape of disk.

25. An organic solvent recovery system for recovering an organic solvent from exhaust gas containing the organic solvent and discharged from a production facility, the organic solvent recovery system comprising:
a cooling/condensing apparatus that cools the exhaust gas containing the organic solvent to liquefy and condense the organic solvent and discharges cooling treatment gas in which a concentration of the organic solvent is reduced;
a cooling gas flow-through path through which part of the cooling treatment gas flows;
a first concentrating apparatus that adsorbs, in a first adsorption element, the organic solvent contained in the cooling treatment gas introduced from the cooling gas flow-through path and discharges first treatment gas in which the concentration of the organic solvent is further reduced, and that introduces high-temperature gas to desorb the organic solvent from the first adsorption element and discharges first desorption gas;
a first treatment gas flow-through path through which the first treatment gas flows; and
a second concentrating apparatus that adsorbs, in a second adsorption element, the organic solvent contained in the first treatment gas introduced from the first treatment gas flow-through path and discharges second treatment gas in which the concentration of the organic solvent is further reduced, and that introduces high-temperature gas to desorb the organic solvent from the second adsorption element and discharges second desorption gas, wherein
the cooling/condensing apparatus includes a heat exchanger that performs the cooling of the exhaust gas by exchanging heat with refrigerant,
the organic solvent recovery system further comprising a heat exchanger return path through which a remainder of the cooling treatment gas other than the part of the cooling treatment gas is returned to the heat exchanger, and
the first desorption gas is returned to the cooling/condensing apparatus and the second desorption gas is returned to the cooling gas flow-through path.

26. An organic solvent recovery system for recovering an organic solvent from exhaust gas containing the organic solvent and discharged from a production facility, the organic solvent recovery system comprising:
a cooling/condensing apparatus that cools the exhaust gas containing the organic solvent to liquefy and condense the organic solvent and discharges cooling treatment gas in which a concentration of the organic solvent is reduced;
a cooling gas flow-through path through which part of the cooling treatment gas flows;
a first concentrating apparatus that adsorbs, in a first adsorption element, the organic solvent contained in the cooling treatment gas introduced from the cooling gas flow-through path and discharges first treatment gas in which the concentration of the organic solvent is further reduced, and that introduces high-temperature gas using a heater to desorb the organic solvent from the first adsorption element and discharges first desorption gas;
a first treatment gas flow-through path through which the first treatment gas flows; and
a second concentrating apparatus that adsorbs, in a second adsorption element, the organic solvent contained in the first treatment gas introduced from the first treatment gas flow-through path and discharges second treatment gas in which the concentration of the organic solvent is further reduced, and that introduces high-temperature gas to desorb the organic solvent from the second adsorption element and discharges second desorption gas, wherein
the cooling/condensing apparatus includes a heat exchanger that performs the cooling of the exhaust gas by exchanging heat with refrigerant,
the organic solvent recovery system further comprising a heat exchanger return path through which a remainder of the cooling treatment gas other than the part of the cooling treatment gas is returned to the heat exchanger, wherein
the first desorption gas is returned to the cooling/condensing apparatus and the second desorption gas is returned to the heater.

27. An organic solvent recovery system for recovering an organic solvent from exhaust gas containing the organic solvent and discharged from a production facility, the organic solvent recovery system comprising:
a cooling/condensing apparatus that cools the exhaust gas containing the organic solvent to liquefy and condense the organic solvent and discharges cooling treatment gas in which a concentration of the organic solvent is reduced;
a cooling gas flow-through path through which part of the cooling treatment gas flows;
a first concentrating apparatus that adsorbs, in a first adsorption element, the organic solvent contained in the cooling treatment gas introduced from the cooling gas flow-through path and discharges first treatment gas in which the concentration of the organic solvent is further reduced, and that introduces high-temperature gas to desorb the organic solvent from the first adsorption element and discharges first desorption gas;
a first treatment gas flow-through path through which the first treatment gas flows; and
a second concentrating apparatus that adsorbs, in a second adsorption element, the organic solvent contained in the first treatment gas introduced from the first treatment gas flow-through path and discharges second treatment gas in which the concentration of the organic solvent is further reduced, and that introduces high-temperature gas to desorb the organic solvent from the second adsorption element and discharges second desorption gas, wherein
the cooling/condensing apparatus includes a heat exchanger that performs the cooling by exchanging heat with refrigerant,
the organic solvent recovery system further comprising a heat exchanger return path through which a remainder of the cooling treatment gas other than the part of the cooling treatment gas is returned to the heat exchanger, wherein
the first desorption gas is returned to the cooling/condensing apparatus and the second desorption gas is returned to the heat exchanger return path.

28. An organic solvent recovery system for recovering an organic solvent from exhaust gas containing the organic solvent and discharged from a production facility, the organic solvent recovery system comprising:
a cooling/condensing apparatus that cools the exhaust gas containing the organic solvent to liquefy and condense the organic solvent and discharges cooling treatment gas in which a concentration of the organic solvent is reduced;
a cooling gas flow-through path through which part of the cooling treatment gas flows;
a first concentrating apparatus that adsorbs, in a first adsorption element, the organic solvent contained in the cooling treatment gas introduced from the cooling gas flow-through path and discharges first treatment gas in which the concentration of the organic solvent is further reduced, and that introduces high-temperature gas to desorb the organic solvent from the first adsorption element and discharges first desorption gas;
a first treatment gas flow-through path through which the first treatment gas flows; and
a second concentrating apparatus that adsorbs, in a second adsorption element, the organic solvent contained in the first treatment gas introduced from the first treatment gas flow-through path and discharges second treatment gas in which the concentration of the organic solvent is further reduced, and that introduces high-temperature gas to desorb the organic solvent from the second adsorption element and discharges second desorption gas, wherein
the cooling/condensing apparatus includes a heat exchanger that performs the cooling by exchanging heat with refrigerant,
the organic solvent recovery system further comprising:
a heat exchanger return path through which a remainder of the cooling treatment gas other than the part of the cooling treatment gas is returned to the heat exchanger; and
a production facility return path through which part of the exhaust gas discharged from the production facility is returned to the production facility after passing through the heat exchanger, wherein
the first desorption gas is returned to the cooling/condensing apparatus and the second desorption gas is returned to the production facility return path.

29. The organic solvent recovery system according to any one of claims 25 to 28, wherein in the first concentrating apparatus, a plurality of the first adsorption elements are disposed in a peripheral direction with respect to a cylinder axis of a rotor that is rotatable with respect to the cylinder axis, the rotor having a hollow cylindrical shape.

30. The organic solvent recovery system according to any one of claims 25 to 28, wherein in the second concentrating apparatus, the second adsorption element is disposed on an adsorption rotor that is rotatable with respect to a cylinder axis of the adsorption rotor, the adsorption rotor having a shape of disk.
